(19) **Europäisches Patentamt**

**European Patent Office**

**Office européen des brevets**

(11) **EP 1 587 668 B1**

(12) **FASCICULE DE BREVET EUROPEEN**

(45) Date de publication et mention
de la délivrance du brevet:
**30.08.2006 Bulletin 2006/35**

(51) Int Cl.:
*B29D 23/20* (2006.01)    *B29C 45/36* (2006.01)
*B65D 35/08* (2006.01)

(21) Numéro de dépôt: **04701982.3**

(22) Date de dépôt: **14.01.2004**

(86) Numéro de dépôt international:
**PCT/FR2004/000063**

(87) Numéro de publication internationale:
**WO 2004/073962 (02.09.2004 Gazette 2004/36)**

(54) **Tube souple réalisé à base de polypropylène et procédé d'obtention d'un tel tube**

Aus Polypropylen hergestelltes flexibles Rohr und Verfahren zur Herstellung des Rohrs

Flexible tube made from polypropylene and method for production of said tube

(84) Etats contractants désignés:
**AT BE BG CH CY CZ DE DK EE ES FI FR GB GR
HU IE IT LI LU MC NL PT RO SE SI SK TR**

(30) Priorité: **24.01.2003 FR 0300819**

(43) Date de publication de la demande:
**26.10.2005 Bulletin 2005/43**

(73) Titulaire: **CEP Industrie
63550 Saint Rémy sur Durolle (FR)**

(72) Inventeur: **DAMBRICOURT, Géry, Bernard, Marie,
Cornil
F-63300 Escoutoux (FR)**

(74) Mandataire: **Bentz, Jean-Paul
Novagraaf Technologies,
122, rue Edouard Vaillant
92593 Levallois-Perret Cedex (FR)**

(56) Documents cités:
**WO-A-01/68355**         **WO-A-98/36905**
**US-A- 5 733 617**        **US-A- 6 159 566**

Printed by Jouve, 75001 PARIS (FR)

## Description

L'invention concerne, de façon générale, un tube souple, résistant à la fissuration sous contrainte et formant barrière à la vapeur d'eau, ainsi qu'un procédé permettant de réaliser un tel tube.

Plus précisément l'invention concerne, selon le premier de ses aspects, un tube résistant à la fissuration sous contrainte et formant barrière à l'eau, essentiellement constitué d'une jupe souple allongée suivant une direction axiale et d'une tête comprenant au moins un orifice d'évacuation et une encolure formant une extension radiale de l'orifice et se raccordant à la jupe selon la direction axiale, la jupe et l'encolure au moins constituant un ensemble monobloc, la paroi du tube étant composée d'un mélange d'un nombre "n" au moins égal à 1 de polymères appartenant à la famille des copolymères-oléfines élaborés à partir de monomères en $C_2$ à $C_{10}$.

Dans la définition générique précédente, le terme de "mélange" est compris au sens le plus large et englobe un matériau constitué d'un unique polymère, un tel matériau pouvant toujours être considéré comme formé d'un mélange de fractions complémentaires quelconques de ce même polymère.

Les corps pâteux, tels que les pâtes dentifrice, les produits pharmaceutiques, les produits de cosmétologie, les produits alimentaires, les produits d'hygiène, les produits de nettoyage, les corps gras, les graisses, les mastics et les colles sont souvent proposés dans des emballages du type tube souple. Ces tubes sont constitués d'un corps tubulaire de section constante, de forme circulaire, ovale ou autre. Le corps tubulaire, formant ce que l'on appelle dans ce qui suit la « jupe », a une première extrémité fermée généralement par thermosoudage et une seconde extrémité opposée, configurée de façon à constituer une tête de distribution des produits contenus dans la jupe. La tête de distribution est munie d'un moyen de bouchage vissé, encliqueté ou autre, de type capsule dite « standard », capsule dite « service » ou autre.

D'une manière générale, le thermosoudage de la première extrémité du tube est réalisé après remplissage du tube avec le produit pâteux à conditionner.

La contenance du tube est l'une de ses caractéristiques essentielles. Dans le cas particulier d'un tube de section circulaire constante, la contenance est définie par la longueur et le diamètre de la jupe, c'est-à-dire par la longueur et le diamètre de la section circulaire de la jupe.

Pour extraire le produit du tube, le consommateur presse la paroi de la jupe, qui subit des déformations et des pliures, de plus en plus marquées, au fur et à mesure du vidage du tube.

La jupe du tube doit donc être réalisée en un matériau souple. Ce matériau doit être soudable thermiquement. Il doit également présenter des caractéristiques de résistance à la fissuration sous contrainte, d'imperméabilité à la vapeur d'eau et d'absence de jaunissement dans le temps sous l'effet des produits contenus dans le tube ou de la contamination dite « croisée » c'est-à-dire imputable à des agents de contamination externes au tube, pour répondre aux cahiers des charges de compatibilité des produits destinés à être conditionnés dans le tube.

Les tubes répondant à tous ces critères sont fabriqués le plus souvent par assemblage ou surmoulage de la tête de distribution réalisée par injection et de la jupe réalisée par extrusion. Un autre procédé, dit d'injection-soufflage, peu utilisé et coûteux, consiste à former la jupe par déplacement de l'empreinte d'un moule consécutivement à l'injection de la tête dans ce moule. Enfin, la jupe et la tête de distribution peuvent être réalisées par injection, en une seule opération.

La fabrication du tube par le procédé de l'injection présente de nombreux avantages : ce procédé remplace une succession d'opérations par une opération unique ; il autorise une grande liberté de forme et supprime la soudure entre la tête et la jupe du tube, laquelle est une zone de rigidité, donc un facteur d'inconfort pour l'utilisateur.

Un premier polymère utilisé pour la fabrication de tubes souples par le procédé d'injection est le polyéthylène.

La première difficulté rencontrée pour réaliser un tube souple par le procédé de l'injection découle de la corrélation forte entre la résistance à la fissuration sous contrainte et la viscosité du polymère lorsqu'on utilise un polyéthylène.

La fissuration sous contrainte ou « stress-cracking » est un phénomène d'attaque physico-chimique d'un produit tensioactif sur un polymère. Ce phénomène se traduit par la formation de micro-fissures dans le polymère pouvant aller jusqu'à l'éclatement de la paroi. Le risque d'éclatement est particulièrement important au voisinage de l'extrémité thermosoudée.

Les produits contenus dans le tube sont plus ou moins chargés en produits tensio-actifs et peuvent donc provoquer la fissuration ou l'éclatement de la paroi.

Afin de caractériser la résistance du matériau à la fissuration sous contrainte, les tubes sont testés de la façon suivante :

Le tube est rempli d'une solution tensio-active à 0.3%, par exemple d'IGEPAL CO 630 ou de NONYLPHENOL ETHOXYLE dans de l'eau distillée, et soudé à une extrémité par pincement à chaud. Le tube est placé dans une étuve à 55°C pendant 24 heures. En sortie d'étuve, on applique une pression de 2 bars à 4,5 bars pendant 2 à 10 secondes, conformément au cahier des charges du donneur d'ordre. A la sortie de l'étuve, le tube ne doit présenter aucune fuite à la soudure, ni aucune fissure ou déchirure de la paroi.

Les polyéthylènes qui répondent au cahier des charges de la fissuration sous contrainte sont fortement visqueux.

Pour injecter ces polymères fortement visqueux, on est conduit à augmenter l'épaisseur de la paroi du tube.

Le Tableau 1 ci-après décrit la relation entre la pression d'injection demandée et l'épaisseur de la paroi du tube lorsque le matériau injecté est un polyéthylène dont l'indice de fluidité (MFI) est de 5g/10mn selon la norme (ISO 1133) et pour deux exemples de tubes :

- en premier lieu, un tube de 19mm de diamètre, de longueur de jupe de 56mm, pour une contenance comprise entre 5 et 9 ml, et

- en deuxième lieu, un tube de 35 mm de diamètre , de 125mm de longueur de jupe, et de 75ml de contenance.

Tableau 1

| FORMAT DU TUBE | Epaisseur de paroi | Pression d'injection |
|---|---|---|
| 5/9ml | 0.45 | 2500 bars |
| | 0.52 | 2000 bars |
| | 0.60 | 1500 bars |
| 75ml | 0.60 | 3 200 bars impossible |
| | 0.70 | 2 700 bars impossible |
| | 0.80 | 2 100 bars |

Dans l'hypothèse d'un polymère de grade 5 et d'un tube de contenance 75 ml et de longueur de jupe de 125mm, lorsque les épaisseurs de paroi sont de 0.6 et 0.7 mm, les pressions d'injection à mettre en oeuvre sont inaccessibles. Selon la pression retenue, on aboutit soit à la destruction de la matière par dépassement de la vitesse limite de cisaillement, soit à un non-remplissage du moule, la matière s'étant solidifiée en cours de parcours, soit à une destruction de la matière par dépassement de la température limite.

D'une façon générale, le polyéthylène est donc mieux adapté aux tubes de petite ou moyenne dimension, de façon à limiter l'épaisseur de paroi imposée par la forte viscosité du matériau.

L'utilisation d'un mélange à base de polypropylène permet de sortir de cette problématique puisque les polypropylènes présentent, en général, à la fois un indice de fluidité relativement élevé et une résistance à la fissuration sous contrainte acceptable y compris lorsque l'indice de fluidité est relativement élevé. Le mélange est ainsi facilement injectable en raison de sa fluidité.

Le principal obstacle à l'utilisation du polypropylène résulte de sa rigidité, en général bien supérieure à celle du polyéthylène, ce qui limite a priori leur utilisation pour la fabrication des tubes souples.

Corrélativement, les polypropylènes présentent une mémoire de pli, un blanchiment au pli, et une odeur âcre peu acceptable lorsqu'ils sont trop rigides.

Le deuxième obstacle résulte de la moindre propriété de barrière à l'eau du polypropylène, en général inférieure à celle des polyéthylènes généralement utilisés pour fabriquer la jupe des tubes souples.

La demande de brevet international WO 01/68355 décrit un tube souple obtenu par le procédé de l'injection et la paroi est constituée d'un polyéthylène ou d'un mélange de polyéthylènes. Bien que permettant d'aboutir à un tube conforme au cahier des charges sous certaines conditions, l'utilisation d'un tel polymère conduit à des situations limites dans lesquelles la paroi du tube présente une rigidité excessive ou une faible imperméabilité, mais également à des situations dans lesquelles le tube n'est pas injectable.

Le brevet européen EP 0 856 473 décrit un conditionnement, notamment un tube, réalisé par le procédé de l'injection et dont la paroi est constituée d'un mélange d'un homopolymère de propylène et d'un copolymère de propylène et d'éthylène.

Cette solution, limitative dans les choix proposés, ne définit ni la rigidité, ni les caractéristiques de barrière à l'eau de la paroi du tube, alors que le problème essentiel posé par l'utilisation du polypropylène découle de la contradiction entre ces deux contraintes.

Le document EP 0 856 473 n'aborde pas non plus les difficultés d'industrialisation liées à la mise en oeuvre des matériaux proposés.

Dans ce contexte l'invention vise notamment à proposer un tube dont la paroi soit à la fois souple et développe un effet barrière efficace vis-à-vis de l'eau.

A cette fin, le tube de l'invention, par ailleurs conforme à la définition générique qu'en donne le préambule ci-dessus, est essentiellement caractérisé :

- en ce qu'il présente, à la moitié de sa longueur suivant la direction axiale, depuis l'extrémité de la jupe distante de la tête jusqu'à l'extrémité de l'encolure formant l'orifice d'évacuation, une épaisseur de paroi comprise entre 0.30 mm et 1.00 mm,

- en ce qu'au moins un polymère du mélange appartient à la famille des polypropylènes,
- en ce que le mélange constitutif de la paroi du tube présente un module de flexion compris entre 700 MPa et 80 MPa, et de préférence compris entre 500 MPa et 120 MPa selon la norme NF EN ISO 178, et
- et en ce que, chaque polymère présentant un module de flexion défini selon la norme NF EN ISO 178 et étant par convention affecté d'un rang "i" qui, dans un classement des "n" polymères du mélange par ordre décroissant de leurs modules de flexion $\mu_i$ respectifs, situe ce polymère entre un premier polymère (i=1) de rigidité maximale et un dernier polymère (i=n) de rigidité minimale, et chaque polymère intervenant dans le mélange selon un pourcentage $x_i$ en poids par rapport au poids total du mélange, le mélange présente un facteur Kd de dispersion des modules de flexion au plus égal à 3 ou à 2.2 selon qu'il contient un polyéthylène ou non, de préférence au plus égal à 2 dans ces deux cas, et plus préférablement au plus égal à 1.5, ce facteur de dispersion Kd étant défini par :

$$ Kd = \sum_{i=1}^{n} \left[ \left( (\sum_{j=1}^{i-1} x_j) \cdot (\nu_{1,i-1} - \nu_{1,i})^2 + x_i \cdot (\lambda_i - \nu_{1,i})^2 \right) / \nu_{1,i}^2 \right] , $$

où : $\lambda_i = \text{MAX} (\mu_i, 1500 \text{ MPa})$, et où $\nu_{p,q} = \left( \sum_{i=p}^{q} x_i \cdot \lambda_i \right) / \left( \sum_{i=p}^{q} x_i \right) .$

Les formules précédentes doivent être interprétées comme utilisant implicitement la convention d'écriture classique exprimée par la relation :

$$ \forall Z, \ s < r \Rightarrow \left( \sum_{r}^{s} Z \right) = 0 . $$

Le premier polymère peut être un copolymère de propylène et d'éthylène.

En particulier, le premier polymère est un polypropylène copolymère hétérophasique de propylène et d'éthylène.

Le polymère le plus rigide peut avantageusement avoir un module de flexion au plus égal à 850 MPa, ce dont il résulte que le mélange constitutif de la paroi du tube est fortement barrière à l'eau.

Le premier polymère peut en outre avoir un module de flexion au plus égal à 500 MPa.

Le mélange comprend par exemple au moins un deuxième polymère.

Dans ce cas, le deuxième polymère a de préférence un module de flexion supérieur à 70 MPa, et intervient dans le mélange dans une proportion comprise entre 15% et 85%, de préférence entre 25% et 75%.

Le deuxième polymère peut aussi avoir un module de flexion inférieur à 70 MPa et être présent dans le mélange dans une proportion inférieure à 50%, de préférence comprise entre 15% et 40%.

Le deuxième polymère peut être constitué par un copolymère d'éthylène-oléfine linéaire en $C_4$-$C_{10}$, ce deuxième polymère ayant un indice de fluidité (MFI) mesuré selon la norme ISO 1133 compris entre 3g/10mn et 15g/10mn, et de préférence compris entre 4g/10mn et 12g/10mn.

En particulier, le deuxième polymère peut être constitué par un copolymère d'éthylène-octène.

Néanmoins, le deuxième polymère peut aussi être un polypropylène ou un copolymère hétérophasique de propylène et d'éthylène.

Le premier polymère, qui peut éventuellement être le seul polymère utilisé, présente avantageusement un module de flexion inférieur à 250 MPa pour une contenance du tube au moins égale à 30 ml.

Il peut être généralement avantageux que tout polymère de la famille des polypropylènes entrant dans la composition du mélange constitutif de la paroi ait un indice de fluidité (MFI) mesuré selon la norme ISO 1133 au plus égal à 100g/10mn, et de préférence au plus égal à 20g/10mn.

La longueur d'un tube conforme à l'invention peut être comprise entre 40 et 85 mm, ou comprise entre 85 et 200 mm.

Le tube de l'invention peut typiquement être obtenu par injection dans un moule d'injection comprenant un noyau et une empreinte, le noyau comprenant lui-même une partie centrale dont une extrémité libre est en appui de centrage sur l'empreinte au moins pendant la phase d'injection de la jupe du tube.

L'extrémité libre de la partie centrale du noyau comporte avantageusement des canaux d'alimentation, auquel cas le tube présente, à son extrémité d'injection, une paroi sommitale au moins partiellement formée de secteurs correspondant aux canaux d'alimentation.

Dans ce cas, les largeurs cumulées des secteurs, dans leurs zones de raccordement avec la face parallèle à la direction axiale de l'orifice, représentent utilement au moins 15%, et de préférence plus de 25%, du périmètre de la face.

Chacun de ces secteurs peut avoir une largeur qui croît depuis un point d'injection du moule suivant une direction radiale centrifuge jusqu'aux points de raccordement des secteurs avec la face de l'orifice.

Par ailleurs, la paroi de l'orifice présente de préférence une zone d'étranglement annulaire située au-delà des secteurs.

La paroi de l'orifice peut éventuellement se prolonger par un anneau de matière situé dans un plan perpendiculaire à l'axe, sous l'extrémité de l'encolure.

De préférence, la partie centrale du noyau du moule d'injection est mobile, et la paroi sommitale de l'extrémité du tube est formée sans ajourage, après recul de la partie centrale mobile d'une distance correspondant à l'épaisseur voulue pour cette paroi sommitale.

L'extrémité libre de la partie centrale du noyau peut être en forme de cône rentrant, l'angle $\gamma$ formé par la portée d'appui de cette extrémité libre sur l'empreinte avec le plan perpendiculaire à l'axe longitudinal du tube étant alors compris entre 15° et 45°, ou même entre 15° et 20°.

L'extrémité libre de la partie centrale du noyau peut aussi être en forme de tronc de cône saillant, l'angle $\beta$ formé par la portée d'appui du tronc de cône saillant de cette extrémité libre sur l'empreinte avec le plan perpendiculaire à l'axe longitudinal du tube étant alors compris entre 35° et 45°.

L'extrémité libre de la partie centrale du noyau peut encore être en forme de cône rentrant dans sa partie interne au tronc de cône saillant, l'angle $\delta$ formé par la portée d'appui du cône rentrant de cette extrémité libre sur l'empreinte avec le plan perpendiculaire à l'axe longitudinal du tube étant inférieur à 45°, de préférence compris entre 15° et 20°.

La tête comprend par exemple un moyen de fixation monobloc de type embout et un réducteur monobloc, l'embout et le réducteur étant situés dans le prolongement de l'orifice dans l'axe XX', la paroi sommitale de l'embout formant le réducteur, l'orifice du réducteur étant obtenu par découpe après le formage du tube par injection, le tube, l'embout, et le réducteur constituant ainsi un ensemble monobloc formé par injection en une opération.

De préférence, la paroi de l'embout monobloc porte un filet artilleur.

Par ailleurs, il est possible de prévoir que le tube de l'invention soit équipé d'un moyen de bouchage muni d'un picot de forme conique, que le picot pénètre dans l'orifice du réducteur monobloc, et que le picot mette en tension radiale centrifuge la paroi du réducteur au voisinage de l'orifice d'ouverture.

La tête peut comprendre un moyen de fixation monobloc de type embout situé dans le prolongement de l'orifice dans l'axe XX', le tube et le moyen de fixation constituant un ensemble monobloc formé par injection en une opération.

Le tube peut être équipé d'un accessoire rapporté de type moyen de distribution de type réducteur rapporté ou canule rapportée, ou moyen de fixation de type embout rapporté formant réducteur ou canule, ou moyen de bouchage de type capsule service, l'accessoire rapporté étant situé dans le prolongement de l'orifice dans l'axe XX'.

L'accessoire rapporté peut être équipé d'une cheminée dont une face externe est conjuguée avec la face parallèle à l'axe XX' de l'orifice, après introduction de la cheminée à l'intérieur de l'orifice.

Dans ce cas, il est avantageux que la cheminée de l'accessoire rapporté mette la paroi latérale de l'orifice en tension radiale centrifuge.

Dans le cas où l'accessoire rapporté est non amovible, la cheminée de l'accessoire rapporté est par exemple équipée d'un dispositif de pénétration de forme conique, la face externe de la cheminée étant radialement en retrait par rapport au dispositif de pénétration.

L'invention concerne également un procédé pour réaliser un tube souple constitué d'une jupe et d'une tête comprenant au moins un orifice d'évacuation et une encolure formant une extension radiale de l'orifice et se raccordant à la jupe, la jupe et l'encolure au moins formant un ensemble monobloc, résistant à la fissuration sous contrainte et barrière à l'eau, ce procédé étant caractérisé en ce qu'il comprend les étapes consistant à :

- utiliser comme matériau constitutif de la paroi un mélange d'un nombre "n" au moins égal à 1 de polymères appartenant à la famille des copolymères-oléfines élaborés à partir de monomères en $C_2$ à $C_{10}$, un polymère au moins appartenant à la famille des polypropylènes, le mélange constitutif de la paroi présentant un module de flexion compris entre 700 et 80 Mpa, de préférence compris entre 500 et 120 Mpa selon la norme NF EN ISO 178, et à
- réaliser la jupe et la tête du tube par injection en une seule opération d'injection du mélange dans un moule d'injection comprenant une empreinte et un noyau, ledit noyau comprenant une partie centrale dont une extrémité supérieure libre est en appui de centrage sur l'empreinte au moins pendant l'injection de la jupe.

D'autres caractéristiques et avantages de l'invention ressortiront clairement de la description qui en est faite ci-après, à titre indicatif et nullement limitatif, en référence aux dessins annexés dans lesquels :

Les figures 1 et 2 représentent une vue de face d'un premier et d'un deuxième exemples du tube de l'invention, observés après fermeture de l'extrémité de remplissage.

Les figures 3A, 3B, 3C et 3D sont quatre plans de coupe de la tête du tube représenté en figure 1, selon quatre modes de réalisation différents.

La figure 4 représente un moule de l'art antérieur, utilisable pour réaliser un tube par injection,

La figue 5 représente un moule utilisable pour injecter un tube conforme à l'invention,

La figure 6 représente schématiquement les nappes d'écoulement lors de l'injection du tube de l'invention,

La figure 7 est une vue agrandie et en perspective de la partie notée VII dans la figure 5,

La figure 8 représente schématiquement une vue en perspective de la tête du moule, à utiliser pour l'injection du tube de l'invention, selon un premier mode de réalisation,

La figure 9 est une vue en coupe de la tête du tube et de la zone correspondante du moule, réalisées selon un premier mode de réalisation du tube, et obtenues pendant la phase d'injection de la jupe du tube, selon l'axe IX-IX de la figure 8.

La figure 9A est une vue en coupe de la tête du tube et de la zone correspondante du moule, réalisées selon un autre mode de réalisation et observées pendant la phase d'injection de la jupe du tube, selon le même axe IX-IX,

La figure 10 est une vue de dessus de la paroi sommitale du tube lorsque le noyau du moule est en appui de centrage sur l'empreinte de ce moule,

Les figures 11A, 11B, 11C et 11D sont quatre plans de coupe représentant quatre exemples d'assemblage avec un accessoire rapporté, la tête du tube étant conforme aux modes de réalisation représentés aux figures 3A, 3B, 3C et 3D, l'encolure étant représentée conformément aux premier et deuxième exemples du tube de l'invention.

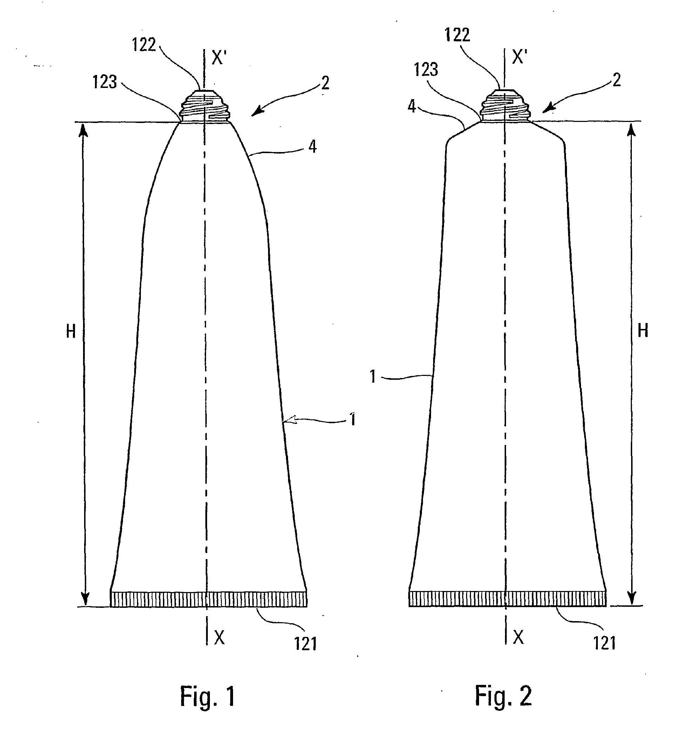

Comme annoncé précédemment, l'invention concerne un tube essentiellement composé d'une jupe souple 1 allongée suivant une direction axiale XX', et d'une tête 2 comprenant au moins un orifice d'évacuation 3 et une encolure 4 formant une extension radiale de l'orifice et se raccordant à la jupe 1 selon la direction axiale XX', la jupe et l'encolure au moins constituant un ensemble monobloc, comme représenté aux figures 1, 2, 3A, 3B, 3C et 3D.

Les contenances des tubes usuellement proposées sur le marché sont comprises entre 2 et 500ml. Les rapports des longueurs de jupes aux diamètres de celles-ci, tels qu'habituellement constatés sur le marché, sont compris entre 2,5 et 6, et de préférence voisins de 4.

L'invention s'applique de préférence aux formats en vigueur sur le marché, et respecte donc un rapport de longueur de jupe par rapport au diamètre compris entre 2,5 et 6, de préférence voisin de 4.

Selon la contenance du tube, et selon le rapport longueur de jupe/diamètre du tube, la longueur de la jupe est donc comprise entre 40 et 200 mm.

Par ailleurs, les produits contenus dans l'enveloppe souple sont plus ou moins chargés en eau.

A l'heure actuelle, en particulier en cosmétologie, les produits conditionnés évoluent vers des émulsions à base aqueuse. Le conditionnement de ces produits doit donc répondre à des critères d'imperméabilité à la vapeur d'eau de plus en plus sévères afin d'éviter une trop forte perte de poids par évaporation de l'eau à travers la paroi souple, et par voie de conséquence une modification du caractère « pâteux » de la crème conditionnée dans le tube. La mesure de la perméabilité à l'eau étant toujours effectuée en pourcentage de la perte de poids de la crème par évaporation, par rapport au poids initial de crème contenu dans le tube, la perte de poids s'exprime donc sous la forme d'un ratio qui dépend simultanément de la porosité à l'eau de la paroi et du rapport entre la surface d'évaporation, c'est-à-dire la surface de la jupe, et le volume de crème contenu dans le tube.

Le test d'imperméabilité à l'eau consiste à placer les tubes, préalablement remplis du produit à tester et soudés, dans une étuve dont la température est comprise, selon les tests, entre 40° et 55°C, généralement entre 45 et 50°C pendant une période de temps comprise, selon les tests, entre 1 semaine et 16 semaines, le plus fréquemment entre 2 et 8 semaines.

Selon la nature de la crème, la dimension du tube, le volume de crème contenu dans le tube, l'exigence d'effet barrière du cahier des charges, la durée d'exposition dans l'étuve et la température de l'étuve, la perte de poids doit être inférieure à 2%, 3%, 5% ou 8% dans l'hypothèse la moins contraignante.

A titre d'exemple, une perte de poids de 5% pour une quantité de crème de 5 grammes représente une évaporation de 0.25 grammes d'eau. Ceci est donc un test extrêmement contraignant dans l'hypothèse d'un conditionnement dans un tube de diamètre 19 mm et d'une exposition du tube dans une étuve à 45°C pendant 8 semaines.

De façon générale, le test est d'autant plus difficile que la taille du tube est réduite : plus la contenance du tube est faible, plus le ratio de surface d'évaporation constitué par la jupe par rapport au volume de crème contenu augmente.

Pour la même raison, la difficulté du test augmente lorsque le tube n'est que partiellement rempli, ce qui contribue également à augmenter le ratio de surface d'évaporation par rapport au volume de crème contenu dans le tube.

En résumé, la perte en poids est liée d'une part à la caractérisation du matériau proprement dit, c'est-à-dire sa porosité, d'autre part à un ensemble de caractéristiques liées à la relation entre le contenant (la crème) et le contenu (le tube).

Ces caractéristiques sont :

- l'objectif de perte de poids qui varie de façon importante selon que le client privilégie la souplesse de la paroi ou l'effet barrière à la vapeur d'eau,
- le volume de crème effectivement conditionné dans le tube,
- la surface d'évaporation représentée par la surface de la jupe,
- l'épaisseur de la paroi,
- les conditions du test de perte de poids, c'est-à-dire, le nombre de jours d'exposition dans l'étuve, et la température de l'étuve, et
- les composants de la crème contenue dans le tube.

Enfin, la jupe du tube doit être souple pour permettre l'évacuation des produits pâteux contenus dans celui-ci, par simple pression de l'utilisateur sur la paroi.

Les polypropylènes sont des polymères dont les modules de flexion sont le plus souvent plus élevés que les modules de flexion des polyéthylènes généralement utilisés dans la fabrication des tubes par injection, et varient dans des proportions très importantes, de 60 MPa à 2000 MPa, voire 2500 MPa, selon la norme ISO 178, en fonction de leur structure chimique, et notamment de la quantité d'éthylène copolymérisée dans le polymère.

La porosité de la paroi étant directement liée à son module de flexion, les tubes dont la paroi offre une barrière à l'eau suffisante sont trop rigides, et les tubes souples sont à la fois insuffisamment imperméables à l'eau et difficilement injectables.

Lorsque le tube est réalisé dans un matériau constitué de polymères dont l'un au moins est un polypropylène, ce matériau doit donc être caractérisé par un module de flexion suffisamment élevé pour définir une imperméabilité compatible avec la perte de poids recherchée, et suffisamment bas pour disposer d'une paroi dont la souplesse est conforme à l'usage du tube, la souplesse étant simultanément fonction de l'épaisseur de la paroi et du module de flexion du matériau la constituant.

A chaque fois que cela est possible, il est d'une façon générale préférable d'utiliser un polymère unique lorsque le matériau de la paroi est à base de polypropylène.

Néanmoins, l'utilisation d'un matériau unique suppose que le module de flexion du polymère dont on dispose corresponde exactement à l'objectif de souplesse et de perte de poids recherché, le polypropylène retenu devant en outre être injectable dans le parcours d'écoulement défini par l'épaisseur et la longueur de la paroi du tube.

Il est donc plus fréquemment nécessaire de recourir à des mélanges de polymères pour obtenir le résultat recherché.

Les analyses effectuées sur des mélanges réalisés et testés conduisent aux observations suivantes :

En premier lieu, la variation de la perte en poids des produits conditionnés dans les tubes n'est pas linéaire avec la variation du module de flexion de la paroi, le module de flexion diminuant plus rapidement que ne se dégrade la perte en poids des produits contenus dans le tube, lorsque le module de flexion du polypropylène est élevé, supérieur au module de flexion maximum acceptable. Plus particulièrement, il a été constaté qu'au delà de 1500 MPa, l'augmentation du module de flexion du polymère n'a plus d'influence notable sur la perte de poids observée.

En deuxième lieu, la perte en poids augmente très rapidement lorsque le module de flexion du polymère le plus souple est très faible et lorsque simultanément ce polymère est utilisé dans un pourcentage très important et tout particulièrement supérieur à 50%.

Il en résulte qu'il est préférable d'atteindre un objectif de flexion donné par les mélanges les plus homogènes possibles.

En d'autres termes :

- le module de flexion du polymère le plus rigide doit être le plus bas possible,
- le module de flexion du polymère le plus souple doit être aussi élevé que possible, et
- les pourcentages des différents polymères constitutifs du mélange doivent être aussi équilibrés que possible, le module de flexion d'un mélange étant toujours plus bas que la moyenne des modules de flexion des polymères constituant le mélange lorsque ce mélange est équilibré entre ses différents constituants.

L'intuition des phénomènes précédemment évoqués et l'observation de nombreux mélanges ont conduit à imaginer une loi permettant d'optimiser le compromis à faire entre la nécessité de réduire la perte de poids et celle de donner au tube une souplesse propre à rendre son utilisation facile et agréable.

Plus précisément, on considère, de façon totalement générique, des mélanges à "n" polymères où "n" est un nombre entier qui, pour des raisons de simplicité, est au moins égal à 1, le terme de "mélange" pour la valeur "n=1" étant formellement justifié par le fait qu'un matériau constitué d'un unique polymère est de toute façon assimilable à un mélange de fractions complémentaires de ce même polymère, chaque polymère appartenant à la famille des copolymères oléfines élaborés à partir de monomères en $C_2$ à $C_{10}$.

La paroi présente, à la moitié de la longueur H du tube suivant sa direction axiale XX' depuis l'extrémité 121 de la jupe distante de la tête jusqu'à l'extrémité 123 de l'encolure 4 formant l'orifice d'évacuation 3 une épaisseur comprise entre 0,30 et 1,00 mm.

Un polymère au moins du mélange appartient à la famille des polypropylènes, le mélange présentant un module de flexion compris entre 700 MPa et 80 MPa, et de préférence comprise entre 500 et 120 MPa selon la norme NF EN ISO 178

Par convention, les polymères sont classés dans le mélange par ordre de rigidité décroissante, chaque polymère prenant ainsi un rang noté "i" qui vaut 1 pour le premier polymère, par définition le plus rigide, et qui vaut "n" pour le dernier polymère, par définition le moins rigide.

Par ailleurs, chaque polymère de rang "i" intervient dans le mélange selon un pourcentage $x_i$ en poids du poids total du mélange, et présente un module de flexion $\mu_i$ défini selon la norme NF EN ISO 178, et dont la valeur constitue une mesure de la rigidité de ce polymère.

La loi précédemment évoquée fait appel à un paramètre ou "facteur de dispersion" noté Kd, lié aux modules de flexion des différents polymères du mélange, et défini par :

$$Kd = \sum_{i=1}^{n} \left[ \left( \sum_{j=1}^{i-1} x_j \right) \cdot (\nu_{1,i-1} - \nu_{1,i})^2 + x_i \cdot (\lambda_i - \nu_{1,i})^2 \right) / \nu_{1,i}^2 \right],$$

où : $\lambda_i = MAX\ (\mu_i, 1500MPa)$, et où $\nu_{p,q} = \left( \sum_{i=p}^{q} x_i \cdot \lambda_i \right) / \left( \sum_{i=p}^{q} x_i \right).$

Comme le comprendra aisément l'homme de métier, "MAX" désigne la fonction de sélection du maximum et le symbole "sigma" désigne un opérateur de sommation, ce dernier satisfaisant à la convention d'écriture classique exprimée par la relation :

$$\forall\ Z,\ s < r \Rightarrow \left( \sum_{r}^{s} Z \right) = 0.$$

Selon un aspect essentiel de l'invention, le facteur de dispersion Kd du mélange est au plus égal à 3 ou à 2.2 selon que le mélange contient un polyéthylène ou non, de préférence au plus égal à 2 dans ces deux cas, et, plus avantageusement encore, au plus égal à 1.5.

L'invention peut ainsi définir une plage de matériaux dont le module de flexion permet d'adapter précisément les caractéristiques de souplesse et d'imperméabilité à l'utilisation recherchée, et notamment à l'objectif de perte de poids, à la dimension du tube, à sa contenance, et à la forme de la tête.

L'invention permet simultanément de définir, pour tout objectif de module de flexion, la composition du mélange qui minimise la perte de poids.

Il a par ailleurs été constaté que le comportement à la flexion du polyéthylène (PE) et celui du polypropylène (PP) étaient de nature différente. En effet, si le confort d'utilisation d'un tube est strictement proportionnel au module de flexion de la paroi de ce tube pour une nature chimique donnée de cette paroi, il n'en est pas de même si l'on compare des tubes dont les parois sont réalisées suivant la voie PP/PP (c'est-à-dire où les premier et deuxième polymères sont des polypropylènes), suivant la voie PP/PE (c'est-à-dire où le premier polymère est un polypropylène et où le deuxième polymère est un polyéthylène), ou suivant la voie PE/PE (c'est-à-dire où les premier et deuxième polymères sont des polyéthylènes).

Il convient donc de comparer avec prudence les modules de flexion de deux matériaux dont les compositions en PE et PP sont différentes.

Enfin, lorsque le PE est utilisé comme simple additif au PP, la résistance à la fissuration sous contrainte du mélange PP/PE conforme au cahier des charges peut être obtenue avec des PE beaucoup plus fluides que dans la voie PE/PE, par exemple avec des polyéthylènes dont l'indice de fluidité (MFI) est au plus égal à 15g/10mn, de préférence au plus égal à 12g/10mn, c'est à dire compris entre 3g/10mn et 15g/10mn, de préférence compris entre 4g/10mn et 12g/10mn.

Le Tableau 2 illustre les résultats de souplesse et de perméabilité de tubes réalisés par le procédé de l'injection et dont le matériau de base comprend au moins un premier polymère de la famille des polypropylènes. Les résultats sont présentés pour trois premiers polymères de polypropylènes différents, parmi lesquels deux sont associés avec un second polymère.

Les résultats de souplesse du tube sont illustrés par la valeur du module de flexion. Les résultats de perméabilité sont des valeurs relatives par rapport à une référence de 100 qui représente la perte de poids d'un tube fortement barrière, c'est-à-dire conforme au cahier des charges de la perte en poids pour un tube de diamètre 19 mm, de longueur de jupe de 56 mm avant soudure, dans lequel on a conditionné un volume de crème de 5ml.

Cette base 100 correspond approximativement à une perte en poids inférieure à 2% pour un tube placé dans une étuve à 50° pendant 14 jours ou inférieure à 5% pour un tube placé dans une étuve à 45° pendant 56 jours.

Tableau 2

| Premier polymère | CLYRELL EC 140 P (SOLUTION 1) Module μ observé : 733 | | | | | | | | | ADFLEX X 500 F (SOUTION 2) μ observé : 399 | | | | | | | | ADFLEX C 200 F (SOLUTION 3) μ observé : 134 | | |
|---|---|---|---|---|---|---|---|---|---|---|---|---|---|---|---|---|---|---|---|---|
| Second polymère | DOWLEX 2035 E (μ observé : 160) | | | ADFLEX X 100 G (μ observé : 64) | | | AFFINITY EG8200 (μ observé : 13,5) | | | ADFLEX X 100 G (μ observé : 64) | | | EXACT 0210 (μ non mesuré) | | AFFINITY EG 8200 (μ observé : 13,5) | | | | | |
| % en poids du second polymère dans le mélange | Module de flexion* (MPa) | Kd | Permé-abilité | Module de flexion (MPa) | Kd | Permé-abilité | Module de flexion (MPa) | Kd | Permé-abilité | Module de flexion (MPa) | Kd | Permé-abilité | Module de flexion (MPa) | Permé-abilité | Module de flexion (MPa) | Kd | Permé-abilité | Module de flexion (MPa) | Kd | Permé-abilité |
| 0% | 733 | 0,00 | 83 | 733 | 0,00 | 83 | 733 | 0,00 | 83 | 399 | 0,00 | 122 | 399 | 122 | 399 | 0,00 | 122 | 134 | 0,00 | 212 |
| 15% | | | | 556 | 0,21 | 108 | 500 | 0,17 | 100 | | | | 280 | 146 | 275 | 0,16 | 172 | | | |
| 25% | 566 | 0,18 | 87 | 386 | 0,24 | 124 | 407 | 0,32 | 128 | 228 | 0,21 | 143 | 267 | 202 | 226 | 0,30 | 229 | | | |
| 33% | | | | | | 139/ 148 | 388 | 0,47 | 170 | 184 | 0,30 | 167 | 245 | 221 | 196 | 0,45 | 271 | | | |
| 50% | 360 | 0,21 | 101 | 250 | 0,70 | 172 | 221 | 0,93 | 282 | 134 | 0,52 | 210 | | | | | | | | |

*module de flexion : module mesuré conformément à la norme NF EN ISO 178. Ce module peut différer du module indiqué sur les brochures commerciales des fabricants de polymères, pour les modules bas ou très bas.

EP 1 587 668 B1

Annexe au Tableau 2

Premiers polymères :

- CLYRELL EC 140 P : copolymère hétérophasique de propylène et d'éthylène, de module de flexion indiqué* de 740 MPa selon la norme ISO 178, d'indice de fluidité de 16g/10mn, et commercialisé par la société BASELL;

- ADFLEX X 500 F : copolymère hétérophasique de propylène et d'éthylène, de module de flexion indiqué de 470 MPa selon la norme ISO 178, d'indice de fluidité de 7,5 g/10mn, de densité de $0,89g/cm^3$, et commercialisé par la société BASELL ;

- ADFLEX C 200 F : copolymère hétérophasique de propylène et d'éthylène, de module de flexion indiqué de 220 MPa selon la norme ISO 178, d'indice de fluidité de 6g/10mn, de densité de $0.890g/cm^3$, et commercialisé par la société BASELL;

Deuxièmes polymères :

- DOWLEX 2035E : copolymère d'éthylène-octène linéaire, de module de flexion de 240 MPa selon la norme ASTM D638, d'indice de fluidité de 6g/10mn, de densité de $0.919g/cm^3$, et commercialisé par la société DOW ;

- ADFLEX X 100 G : copolymère hétérophasique de propylène et d'éthylène, de module de flexion indiqué de 80 MPa, d'indice de fluidité de 8g/10mn, de densité de $0.890g/cm^3$, et commercialisé par la société BASELL;

- AFFINITY EG 8200 : copolymère d'éthylène-oléfine linéaire, de module de flexion indiqué de 20 Mpa selon la norme ASTM D790, d'indice de fluidité de 5g/10mn, de densité de $0.870g/cm^3$, et commercialisé par la société DOW.

- EXACT 0210 : copolymère d'éthylène-octène linéaire, de module de flexion de 65 MPa selon la norme ISO 178, d'indice de fluidité de 10g/10mn, de densité de $0.902g/cm^3$, et commercialisé par la société DEXPLASTOMERS.

Le module de flexion "indiqué" est celui que mentionne la documentation du fournisseur. Le module de flexion reproduit sur le Tableau 2 est le module mesuré suivant la norme NF EN ISO 178.

L'indice de viscosité est donné en g/10mn conformément à la norme ISO 1133.

Le Tableau 2 met en évidence les choix des matériaux possibles en fonction de la dimension du tube et de l'objectif recherché.

Il convient tout d'abord de noter que les modules de flexion mesurés figurant sur le document et les indices de perméabilité calculés s'inscrivent dans le champ des objectifs recherchés, en fonction de la convenance du tube et de la souplesse de paroi souhaitée.

Il convient également de noter en préalable, pour toute solution étudiée, la relation constatée entre l'augmentation de la souplesse de la paroi et l'augmentation de la perte de poids imputable à la porosité de la paroi.

Il convient enfin de noter les observations préalables suivantes :

- si la souplesse du toucher est strictement inversement proportionnelle au module de flexion à l'intérieur de chaque colonne (même composants), les comparaisons entre des tubes constitués de mélanges appartenant à des colonnes différentes du Tableau 1 (composants différents), et a fortiori les comparaisons entre des parois composées de polyéthylène exclusivement et des parois composées de polypropylène exclusivement doivent être effectuées avec prudence, notamment lorsque les modules de flexion sont bas. Deux tubes composés de matériaux qui présentent des écarts de module de flexion de l'ordre de 50 MPa, voire 100 MPa, peuvent disposer au toucher d'une souplesse comparable.

Les pertes de poids mentionnées sur le Tableau 1 sont communiquées à titre indicatif pour une crème donnée, un tube donné, et des conditions données de mesure de perte de poids (température d'étuve et durée d'observation).

En conséquence, la présente invention définit les fourchettes de caractérisation qui garantissent des fourchettes de résultats en termes de souplesse et de perte de poids. A l'intérieur de ces fourchettes, toute obtention de résultat devra être validée par un test définitif qui prendra en compte le produit effectivement conditionné, le tube effectivement utilisé et les conditions contractuelles (sur cahier des charges) du test de perte de poids.

Le premier polymère appartient à la famille des polypropylènes, et préférablement c'est un copolymère d'éthylène et de propylène.

En effet, lorsque le polypropylène le plus rigide appartient à la famille des copolymères d'éthylène et de propylène, on peut ainsi diminuer le pourcentage du polymère le plus souple dans le mélange, et donc diminuer la porosité de la paroi, pour un objectif de souplesse donnée. Le plus avantageusement, le premier polymère est un copolymère hétérophasique d'éthylène et de propylène.

C'est en effet dans cette famille de polypropylènes que l'on a découvert les propylènes dont les modules de flexion sont les plus bas.

Sur le Tableau 1, le premier polymère, c'est-à-dire le polymère le plus rigide du mélange, et qui appartient à la famille des polypropylènes, présente

- en solution de type n°1 :
  un module de flexion indiqué de 740 MPa, et mesuré de 733 MPa, compris entre 850 et 500 MPa,
- et en solution de type n°2 :
  un module de flexion indiqué de 470 MPa et mesuré de 399 MPa, inférieur à 500 MPa.

L'analyse du Tableau 1 permet de constater que le matériau retenu en solution de type n°1 permet, après mélange et pour des modules de flexion du matériau résultant compris entre 300 et 400 MPa, d'atteindre des pertes de poids de l'ordre 100 à 130, et donc de disposer de matériau présentant un fort effet de barrière à l'eau.

De même, le matériau retenu en solution de type n°2, permet, après mélange et pour des modules de flexion du matériau résultant compris entre 150 et 300 MPa, c'est-à-dire très souple pour une épaisseur de paroi voisine de 0.6mm, d'atteindre des pertes de poids comprises entre 150 et 250, c'est-à-dire s'inscrivant sans réserve dans l'échelle permettant de qualifier le matériau pour des tubes de grande dimension.

Pour chaque solution de type n°1 (privilégiant l'effet barrière) ou de type n°2 (privilégiant la souplesse de la paroi), on a assoupli le premier polymère au moyen d'un deuxième polymère de la famille des polypropylènes ou des polyéthylènes.

Lorsque la voie choisie pour le deuxième matériau est un polyéthylène, on retient préférablement un polyéthylène linéaire dont l'indice de fluidité garantit la résistance à la fissuration sous contrainte du mélange, son indice de fluidité (MFI) étant compris entre 3g/10mn et 15g/10mn, de préférence compris entre 4g/10mn et 12g/10mn.

Lorsque le module de flexion du deuxième polymère est supérieur à 70 MPa, on peut intégrer ce polymère à raison de 15% à 85% dans le mélange, et de préférence de 25% à 75%.

A titre d'exemple, en solution n°1, le mélange de 50% de CLYRELL EC140P et de 50% de DOWLEX 2035E offre une perte de poids de 101 et un module de flexion de 360. Son coefficient de dispersion Kd est de 0.26.

Il s'agit d'une solution très performante, puisqu'obtenue avec un matériau dont l'indice de fluidité (MFI) résultant est d'environ 10g/10mn, alors qu'une solution équivalente dans la voie PE met en oeuvre un matériau dont l'indice de fluidité (MFI) est significativement inférieur pour résister à la fissuration sous contrainte.

La voie PP/PE moyennement souple ouvre donc des perspectives d'amincissement de la paroi, donc d'assouplissement, du plus grand intérêt pour les tubes nécessitant un matériau fortement barrière à l'eau.

Si la solution recherchée est celle d'un polymère très souple, le module de flexion du deuxième polymère étant inférieur à 70 MPa, on a pu constater, conformément à ce qui est rapporté sur le Tableau 1, que la perte de poids de la crème contenue dans le tube augmentait rapidement avec la proportion en deuxième polymère. Aussi convient-il de limiter à 50% au maximum le pourcentage d'un tel polymère dans le mélange, celui-ci étant de préférence compris entre 15 et 40%.

Pour limiter à moins de 50% le pourcentage du deuxième polymère dans le mélange, on utilisera donc de préférence un premier polymère le plus souple possible.

Le Tableau 1 met en évidence en solution de type n°2 que des modules de flexion très bas, compris entre 150 et 300 MPa peuvent être obtenus avec des pertes de poids acceptables, comprises entre 220 et 270 lorsque le deuxième matériau est présent dans le mélange à 33%.

Il s'agit donc là d'une voie très performante pour les tubes qui requièrent un matériau souple, et tout particulièrement les tubes de grande dimension nécessitant une paroi épaisse, par exemple supérieure à 0.6 mm.

Par ailleurs, on utilisera préférablement un copolymère d'éthylène-octéne.

Lorsque le deuxième matériau est un polypropylène, les règles sont identiques.

Si le deuxième polypropylène est très souple, son module de flexion étant inférieur à 70 MPa, il conviendra de l'utiliser dans une proportion inférieure à 50%, préférablement comprise entre 15% et 40%.

Si le deuxième polypropylène est moyennement souple, son module de flexion étant supérieur à 70 MPa, on pourra l'utiliser dans une proportion comprise entre 15 et 85% de préférence entre 25 et 75%.

Les polypropylènes utilisés comme deuxième matériau sont avantageusement des copolymères de propylène et d'éthylène. De préférence, ce sont des polymères hétérophasiques. Enfin, comme cela est mis en évidence sur le Tableau 1, certains polypropylènes disposent d'un module de flexion suffisamment bas pour pouvoir être utilisés seuls, sans ajout d'un deuxième polymère.

Lorsqu'on veut utiliser un matériau fortement barrière, on utilisera un matériau relativement peu souple, par exemple proche de la limite supérieure de 500 MPa pour un petit tube ayant typiquement un diamètre de 19 mm et une épaisseur de paroi inférieure à 0.65mm. On utilisera alors le premier polymère sans adjonction d'un deuxième polymère.

Le Tableau 1 met également en évidence au travers de la solution de type n°3 que certains polypropylènes disposant d'un module de flexion bas, typiquement inférieur à 250 MPa (module indiqué de 220 MPa et mesuré de 134 MPa), présentent une perte de poids acceptable pour les tubes de grande dimension, de contenance au moins égale à 30 ml.

Cette solution très performante sur les tests de perte en poids de courte durée est cependant moins performante que les solutions construites sur des mélanges de type solution de type n°2 lorsqu'on pratique un test de perte de poids de longue durée.

Une autre observation concerne le choix à faire entre un deuxième polymère pris dans la famille des polypropylènes ou un deuxième polymère pris dans la famille des polyéthylènes, lorsque le module de flexion et la perte en poids sont comparables.

On procédera alors sur les critères de sélection suivants :

- en premier critère, la viscosité du matériau, si l'on souhaite amincir la paroi, mais tout en rappelant que la barrière à l'eau est proportionnelle à l'épaisseur de la paroi,
- en deuxième critère, le toucher, car, pour deux matériaux de souplesse équivalente, le toucher du polypropylène est relativement plus "nerveux", alors que le toucher du polyéthylène est relativement plus "doux".

Les autres critères de choix portent sur les effets de barrière secondaires, du type barrière aux esters, barrière à l'oxygène ou barrière à tout autre composant du produit contenu dans la crème ainsi que les effets de jaunissement de la paroi sous l'effet de tout composant du produit contenu dans le tube ou sous l'effet de tout agent contaminant externe lors de l'utilisation du tube par le consommateur.

Enfin, on pourra prendre en considération les effets secondaires comme la mémoire de pli ou le blanchissement de la paroi dans les zones de forte pliure, ces effets étant très fortement atténués, voire supprimés, grâce aux polypropylènes caractérisés dans l'invention.

D'une façon générale on aura bien compris que pour optimiser toute solution, il est préférable de rapprocher les caractéristiques des matériaux utilisés et donc d'utiliser des polymères dont les modules de flexion sont aussi proches que possible les uns des autres.

Par ailleurs, on utilisera utilement des polypropylènes dont l'indice de fluidité est compatible avec le parcours d'écoulement défini par la longueur et l'épaisseur de la paroi et néanmoins capable de résister à la fissuration sous contrainte conformément au cahier des charges précédemment défini, c'est-à-dire disposant d'un indice de fluidité (MFI), mesuré selon la norme ISO 1133, inférieur à 100g/10mn et de préférence inférieur à 20g/10mn.

Par ailleurs, le tube de l'invention est obtenu en injectant la tête et la jupe en une seule opération, en mettant en oeuvre des conditions de pression d'injection extrêmes permettant d'injecter des matériaux à viscosité élevée dans des parois minces. En effet, alors que les pressions d'injection habituelles sont de l'ordre de 450 à 600 bars, il peut être nécessaire d'utiliser des pressions d'injection supérieures, par exemple de l'ordre de 1250 à 2500 bars, pour réaliser une jupe simultanément souple, barrière à l'eau et résistante à la fissuration sous contrainte lorsque le matériau est à base de polypropylène.

Dans le cas de l'invention, la relative rigidité du premier polymère peut être compensée simultanément par l'ajout d'un polymère plus ou moins chargé en éthylène, donc généralement peu fluide, et par l'amincissement de la paroi, ce qui suppose l'utilisation de pressions d'injection élevées, tout particulièrement pour les tubes de grande dimension.

Le tube de l'invention présente une épaisseur de paroi comprise entre 0.30 et 1.00 mm à mi-hauteur de la jupe pour une longueur de jupe comprise entre 40 et 200 mm.

Les matériaux injectés pouvant supporter des pressions d'injection de 1250 à 2500 bars, il est avantageux d'utiliser ces pressions pour diminuer l'épaisseur de la paroi du tube et augmenter la souplesse, sans diminuer le module de flexion, donc sans dégradation de l'effet barrière.

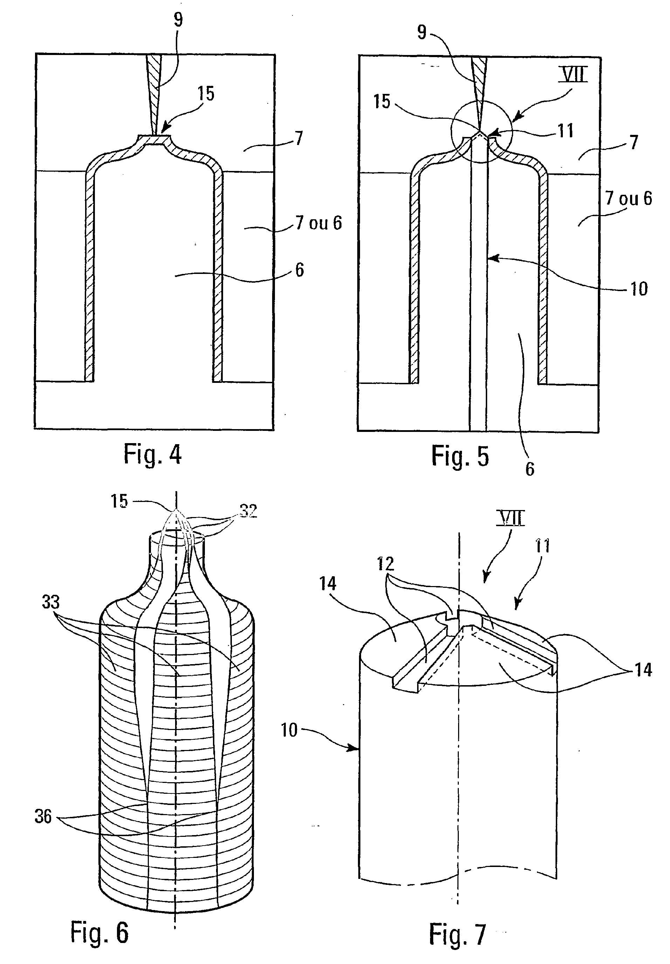

Certains tubes sont injectés dans un moule connu tel que représenté en figure 4, ce moule étant composé d'un noyau noté 6 et d'une empreinte notée 7 dans laquelle s'inscrit la buse d'injection notée 9, c'est-à-dire le canal par lequel le matériau plastique en fusion est conduit dans la cavité définie par l'empreinte et le noyau. Sous l'effet de la pression d'injection très élevée nécessaire pour injecter le matériau dans les épaisseurs de paroi optimisées pour améliorer la souplesse du tube et pour une longueur de jupe importante, le noyau du moule a tendance à fléchir vers l'empreinte. Il en résulte une paroi d'épaisseur variable et donc de souplesse variable. De façon beaucoup plus grave, le décentrage du noyau génère des flots préférentiels de matière lors de l'injection de la jupe, flots préférentiels qui se rejoignent en "lignes de soudure" qui forment des zones de non-résistance à la fissuration sous contrainte.

Il est donc très important que la paroi du tube soit d'épaisseur constante, sans renfort de toute matière et notamment pas longitudinalement, pour préserver à la fois le confort d'utilisation du tube et la résistance à la fissuration sous contrainte.

Un premier type de moule d'injection permettant d'obtenir ce résultat est représenté en figure 5. Comme on le voit sur cette figure, le noyau 6 d'un tel moule comporte une partie centrale notée 10, dont une extrémité libre notée 11 est en appui de centrage sur l'empreinte 7.

Cet appui de centrage permet d'apporter la souplesse recherchée tout en préservant la propriété de barrière à l'eau en agissant sur la diminution de l'épaisseur de paroi, de préférence à la diminution du module de flexion du matériau utilisé. Pour un matériau donné, on constate par exemple que la jupe du tube présente une rigidité importante au-delà d'une épaisseur de paroi de 0.8 mm, alors la souplesse est satisfaisante pour une épaisseur de paroi comprise entre 0.45mm et 0.50mm. Ainsi, la stabilisation du noyau obtenue par l'appui de centrage de sa partie centrale 10 sur l'empreinte, conjuguée à l'utilisation du polypropylène, permet de :

- diminuer l'épaisseur de paroi jusqu'à approximativement 0.45mm pour des tubes de petite dimension dont la paroi est moyennement souple,
- diminuer l'épaisseur de paroi jusqu'à approximativement 0.50 mm pour des tubes de petite dimension dont la paroi est très souple, et
- diminuer l'épaisseur de paroi jusqu'à 0,60 mm pour des tubes de grande dimension dont la longueur, hors canal de distribution, est voisine de 150 mm.

Quelle que soit la forme du tube, illustrée en exemple non limitatif en figure 1 et figure 2, l'invention s'applique donc à la fois aux tubes dont la longueur H est comprise entre 40 et 85 mm, et tout particulièrement aux tubes de grande dimension dont la longueur H est comprise entre 85 et 200 mm.

Pour procéder à l'injection du matériau depuis le point d'injection central 15 jusqu'à la tête du tube, on crée des canaux d'alimentation radiaux dans l'extrémité libre 11 de la partie centrale 10 du noyau. Les canaux d'alimentation 12 et les zones d'appui 14 de l'extrémité libre 11 de la partie centrale 10 sont plus clairement visibles en figure 7, qui est une vue agrandie de la partie notée VII en figure 5.

Cependant, la mise en oeuvre de cette technique présente l'inconvénient de créer autant de points d'alimentation de la jupe que de canaux 12 entre le point d'injection et la tête du tube.

En effet, comme cela est représenté en figure 6, on crée trois nappes de matière indépendantes 33, alimentées par les trois flots de matière 32, correspondant aux trois canaux 12, le nappes étant reliées entre elles par trois lignes de soudure 36 et formant la jupe du tube en fin d'opération d'injection.

Une autre solution consiste à décentrer le point d'injection 15, par exemple de façon non limitative, en le dédoublant, et en plaçant chaque point d'injection dans le prolongement de la paroi 29 parallèle à l'axe XX', à l'extrémité 122 du tube.

Cette solution, possible mais non préférée, complique fortement le système d'injection du moule, risque de dégrader la résistance à la fissuration sous contrainte des lignes de soudure, mais permet de supprimer les canaux d'alimentation 12, tout en conservant l'appui de centrage 11 du noyau sur l'empreinte.

Les lignes de soudure 36 présentent l'inconvénient de créer des zones de non résistance à la fissuration sous contrainte de la jupe, cet inconvénient étant atténué par l'usage du polypropylène, plus résistant que le polyéthylène à la fissuration sous contrainte.

Pour pallier cet inconvénient, l'invention précise les détails de forme du tube et les procédés correspondants qui permettent d'atténuer les lignes de soudure tout en conservant l'appui indispensable du noyau sur l'empreinte.

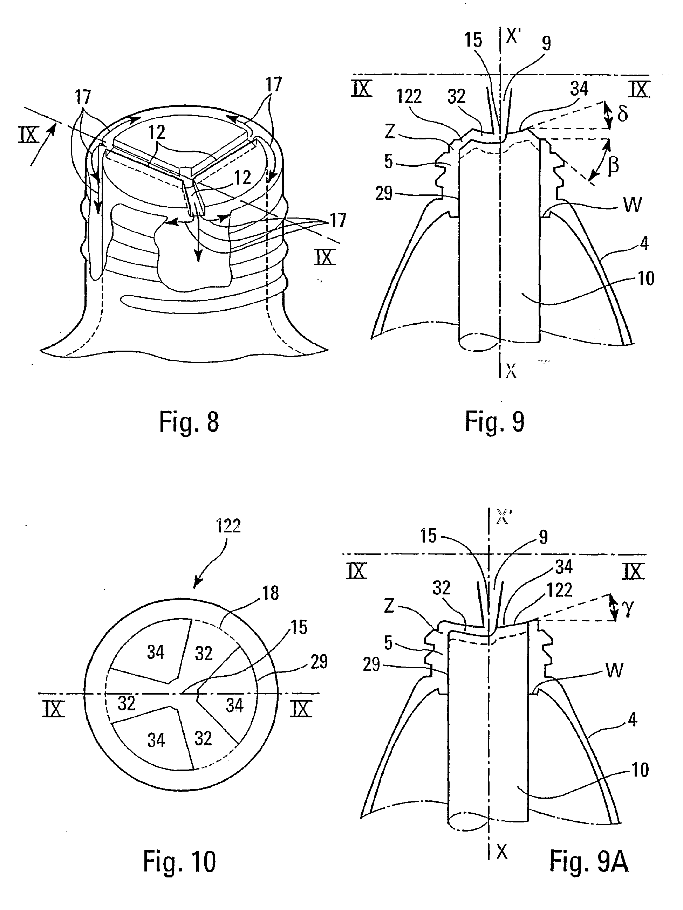

Les détails de forme du tube et le moule correspondant seront maintenant décrits en référence aux figures 8, 9, 9A et 10.

L'extrémité 122 du tube est formée au moins des secteurs 32 correspondant aux canaux 12 réalisés dans l'extrémité libre 11 de la partie centrale 10 du noyau, conformément à la figure 10.

Tout d'abord, afin de faciliter la reconstitution d'un flot de matière circulaire à partir des points de raccordement entre les canaux radiaux d'injection et la partie supérieure de la tête, on a intérêt à constituer une ligne de raccordement aussi large que possible entre chaque canal radial d'injection et la partie supérieure de la tête du tube conformément à la figure 10.

Une solution avantageuse consiste à prévoir des largeurs de raccordement cumulées des secteurs 32 au point de raccordement 18 avec la face 29 parallèle à l'axe XX' de l'orifice 3 représentant au moins 15% du périmètre de la face 29.

Une autre solution améliorant encore l'alimentation annulaire, mais réduisant la surface d'appui du noyau sur l'empreinte, consiste à porter les largeurs cumulées de raccordement des secteurs d'alimentation au point de raccordement 18 avec la face 29 à plus de 25% du périmètre de la paroi.

Afin de conserver une surface maximum d'appui du noyau sur l'empreinte tout en maximisant les largeurs cumulées de raccordement des secteurs 32 avec la face 29, il est avantageux de donner aux secteurs 32 une largueur croissante, depuis le point d'injection 15 jusqu'au point de raccordement 18 avec la face 29.

Par ailleurs, toujours afin de favoriser la reconstitution d'un flux annulaire de matière, il est avantageux de prévoir une zone d'étranglement annulaire Z située sur la paroi de l'orifice, au-delà de la zone de raccordement des secteurs 32.

Enfin, pour augmenter encore l'effet de diffusion annulaire, il est avantageux de prolonger la paroi de l'orifice par un anneau de matière W situé dans un plan perpendiculaire à l'axe XX', sous l'extrémité 123 de l'encolure.

Après l'injection de la jupe et de la tête du tube, la partie centrale 10 du noyau étant en appui de centrage sur l'empreinte 7, on comprend aisément que la paroi de l'extrémité 122 du tube, représentée en exemple non limitatif en figure 10, en projection sur un plan perpendiculaire à l'axe XX', est constituée des secteurs 32 correspondant aux canaux d'alimentation 12 représentés en figure 8.

La paroi 122 est donc ajourée dans les secteurs 34 qui correspondent aux zones d'appui 14 de l'extrémité libre 11 de la partie centrale 10 sur l'empreinte 7.

On peut rendre mobile la partie centrale 10 du noyau 6 par rapport au noyau périphérique et former sans ajourage la paroi sommitale 122 du tube en procédant au recul de la partie centrale mobile 6 du noyau, d'une distance correspondant à l'épaisseur voulue de cette paroi sommitale.

Dans une première version illustrée à la figure 9, l'extrémité libre 11 de la partie centrale 10 du noyau est dessinée en forme de cône rentrant, l'angle $\gamma$ de la portée d'appui de l'extrémité libre 11 de la partie centrale 10 sur l'empreinte 7 avec le plan perpendiculaire à l'axe longitudinal XX' du tube étant inférieur à 45°, de préférence compris entre 15° et 20°, pour offrir un confort optimal au consommateur.

Cette version est adaptée pour les tubes de petite dimension. Elle est plus difficilement mise en oeuvre pour les tubes de grande dimension. En effet pour un tube de grande dimension, la longueur de la partie centrale 10 du noyau et la nature des aciers retenus sont tels que le noyau central se comprime sous la pression d'injection comprise entre 1200 et 2500 bars de telle sorte que le centrage ne peut être assuré avec une pente d'appui comprise entre 15° et 20°, une pente d'appui comprise entre 35° et 45° étant nécessaire pour compenser la compression du noyau.

Dans une deuxième version illustrée en figure 9A et applicable aux tubes de grande dimension, l'extrémité libre 11 de la partie centrale 10 est en forme de tronc de cône saillant, l'angle $\beta$ formé par la portée d'appui du tronc de cône saillant sur l'empreinte 7 avec le plan perpendiculaire à l'axe longitudinal XX' du tube étant compris entre 35° et 45°.

Dans cette même version, l'extrémité libre 11 de la partie centrale 10 est en forme de cône rentrant dans sa partie interne au tronc de cône saillant, l'angle $\delta$ de la portée d'appui du cône rentrant de l'extrémité libre 11 de la partie centrale 10 sur l'empreinte 7 avec le plan perpendiculaire à l'axe longitudinal XX' du tube étant inférieur à 45°, de préférence compris entre 15° et 20°.

Après rétractation du noyau central, la paroi 122 est en forme de tronc de cône saillant dans sa partie périphérique et en forme de cuvette dans sa partie centrale.

Ainsi dans cette deuxième version, la forme donnée à l'extrémité 122 du tube permet simultanément d'optimiser le centrage du noyau lors de l'opération d'injection et d'offrir un confort optimal d'utilisation au consommateur.

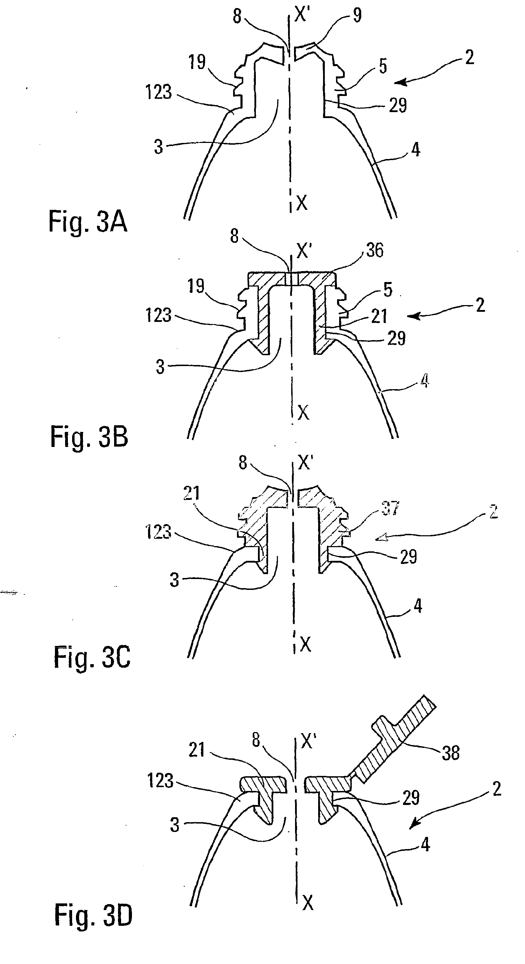

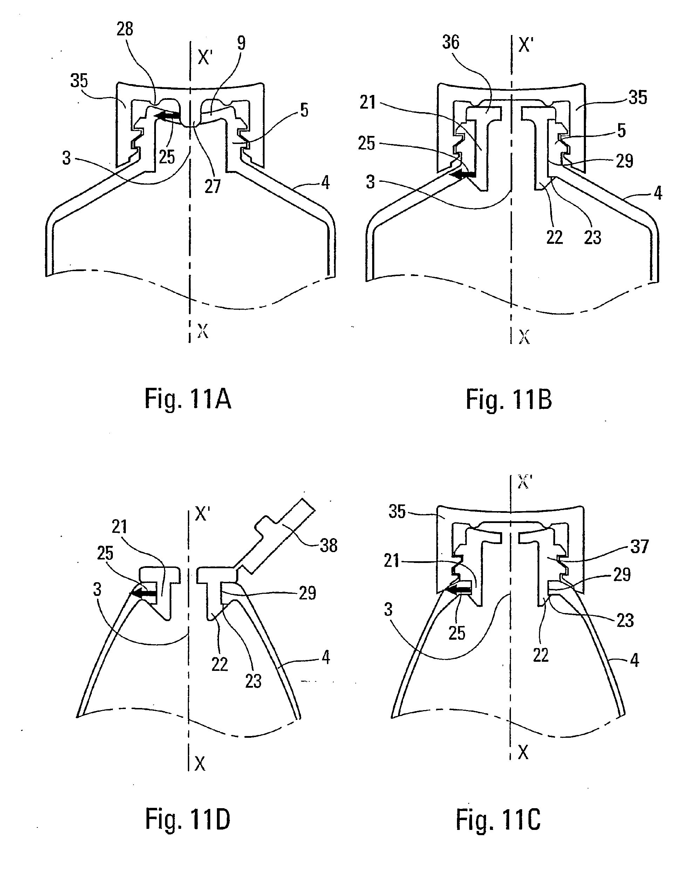

Dans cette première version (figure 11A) et cette deuxième version (figure 3A), la tête du tube comprend un moyen de fixation monobloc de type embout 5 et un réducteur monobloc 9, l'embout et le réducteur étant situés dans le prolongement de l'orifice 3 sur l'axe XX' , la paroi sommitale 122 du tube formant le réducteur 9, l'orifice 8 du réducteur étant obtenu par découpe, après formage du tube par injection, le tube, l'embout et le réducteur constituant ainsi un ensemble monobloc formé par injection en une opération.

Enfin, le tube étant habituellement fermé par un moyen de bouchage 35 de type capsule "service" ou capsule "standard", une première solution consiste à réunir le tube et la capsule au moyen d'un assemblage par vissage par exemple.

La tête du tube monobloc étant réalisée dans le même matériau souple et élastique que la jupe, le matériau constitutif de la tête et notamment le pas de vis peuvent fluer sous l'effet de la force résultant du serrage de la capsule sur le tube.

Pour pallier cet inconvénient deux dispositions sont préférées, conformément au dessin de la figure 11A.

En premier lieu, le filet du pas de vis 19 est un filet de type artilleur, conformément aux dessins des figures 3A, 9, et 9A.

En deuxième lieu, l'étanchéité est assurée au moyen d'un picot 27 de forme conique, disposé sur le moyen de bouchage 35, l'étanchéité étant assurée par mise en tension radiale centrifuge 25 de la paroi du réducteur monobloc 9 lors de la pénétration du picot 27 dans l'orifice d'ouverture 8 du réducteur, comme représenté en figure 11A.

Dans cette solution préférée, l'appui du moyen de bouchage sur le tube est assuré au moyen d'un anneau d'appui 28 situé à la périphérie interne du bouchon 35 et portant sur la zone périphérique du réducteur.

Dans une troisième version, la tête comprend un moyen de fixation monobloc de type embout 5 situé dans le prolongement de l'orifice 3 sur l'axe XX', le tube et le moyen de fixation 5 constituant un ensemble monobloc réalisé en une opération d'injection comme représenté en figure 3B, la tête pouvant être équipée d'un accessoire rapporté du type réducteur rapporté ou canule.

Dans une quatrième version, la tête est équipée d'un accessoire rapporté du type moyen de distribution de type réducteur rapporté ou canule rapportée ou autre, moyen de fixation de type embout à vis ou autre, moyen de bouchage de type capsule service ou autre, comme représenté de façon non limitative aux figures 3C et 3D.

Dans l'une ou l'autre de ces versions, la tête est équipée de l'accessoire rapporté formant réducteur rapporté 36, embout rapporté formant réducteur 37, capsule service 38, l'accessoire rapporté étant situé dans le prolongement de l'orifice 3 sur l'axe XX', les accessoires 36, 37 et 38 constituant des exemples non limitatifs.

Lorsque le tube est équipé d'un accessoire rapporté 36 ou 37 ou 38, l'invention prévoit préférablement que l'accessoire est équipé d'une cheminée 21 dont la face externe est conjuguée avec la face 29 parallèle à l'axe XX' de l'orifice 3, après introduction de la cheminée 21 à l'intérieur de l'orifice 3, pour assurer la fixation de l'accessoire sur le tube, la cheminée mettant en tension radiale centrifuge 25 la paroi 29 de l'orifice.

La paroi du tube de l'invention étant réalisée dans un matériau souple, la solution décrite permet d'éviter un bâillement, ou, plus grave, un défaut d'étanchéité ou un désassemblage du tube et de l'accessoire rapporté lorsque le consommateur appuie sur la paroi du tube. De plus, la solution proposée met à profit la souplesse du matériau de l'invention pour assurer la tenue de l'accessoire.

De façon préférentielle, la cheminée 21 est équipée d'un dispositif de forme conique 22 pour réaliser son introduction dans l'orifice 3.

De façon plus préférentielle, la face externe de la cheminée 21 est radialement en retrait 23 du dispositif 22, la contre-dépouille 23 bloquant l'accessoire rapporté dans l'axe XX', l'accessoire rapporté étant alors non amovible.

Dans l'une et l'autre de ces versions 3 et 4, le tube et l'accessoire rapporté disposent de moyens conjugués pour assurer l'étanchéité de l'assemblage et éventuellement interdire la rotation de l'accessoire rapporté par rapport au tube.

## Revendications

**1.** Tube résistant à la fissuration sous contrainte et barrière à l'eau, essentiellement constitué d'une jupe souple (1) allongée suivant une direction axiale (XX') et d'une tête (2) comprenant au moins un orifice d'évacuation (3) et une encolure (4) formant une extension radiale de l'orifice (3) et se raccordant à la jupe (1) selon la direction axiale (XX'), la jupe et l'encolure au moins constituant un ensemble monobloc, la paroi du tube étant composée d'un mélange d'un nombre "n" au moins égal à 1 de polymères appartenant à la famille des copolymères-oléfines élaborés à partir

de monomères en $C_2$ à $C_{10}$, **caractérisé :**

- **en ce qu'**il présente, à la moitié de sa longueur (H) suivant la direction axiale (XX'), depuis l'extrémité (121) de la jupe (1) distante de la tête jusqu'à l'extrémité (123) de l'encolure (4) formant l'orifice d'évacuation (3), une épaisseur de paroi comprise entre 0.30 mm et 1.00 mm,
- **en ce qu'**au moins un polymère du mélange appartient à la famille des polypropylènes,
- **en ce que** le mélange constitutif de la paroi du tube présente un module de flexion compris entre 700 MPa et 80 MPa, et de préférence compris entre 500 MPa et 120 MPa selon la norme NF EN ISO 178, et
- et **en ce que**, chaque polymère présentant un module de flexion défini selon la norme NF EN ISO 178 et étant par convention affecté d'un rang (i) qui, dans un classement des "n" polymères du mélange par ordre décroissant de leurs modules de flexion ($\mu_i$) respectifs, situe ce polymère entre un premier polymère (i=1) de rigidité maximale et un dernier polymère (i=n) de rigidité minimale, et chaque polymère intervenant dans le mélange selon un pourcentage $x_i$ en poids par rapport au poids total du mélange, le mélange présente un facteur (Kd) de dispersion des modules de flexion au plus égal à 3 ou à 2.2 selon qu'il contient un polyéthylène ou non, de préférence au plus égal à 2 dans ces deux cas, et plus préférablement au plus égal à 1.5, ce facteur de dispersion (Kd) étant défini par :

$$Kd = \sum_{i=1}^{n} \left[ \left( \left( \sum_{j=1}^{i-1} x_j \right) \cdot (\nu_{1,i-1} - \nu_{1,i})^2 + x_i \cdot (\lambda_i - \nu_{1,i})^2 \right) / \nu_{1,i}^2 \right] ,$$

où : $\lambda_i = $ MAX $(\mu_i, 1500 \text{ MPa})$ et où $\nu_{p,q} = \left( \sum_{i=p}^{q} x_i \cdot \lambda_i \right) / \left( \sum_{i=p}^{q} x_i \right) .$

**2.** Tube selon la revendication 1, **caractérisé en ce que** le premier polymère est un copolymère de propylène et d'éthylène.

**3.** Tube selon l'une quelconque des revendications précédentes, **caractérisé en ce que** le premier polymère est un polypropylène , copolymère hétérophasique de propylène et d'éthylène.

**4.** Tube selon l'une quelconque des revendications précédentes, **caractérisé en ce que** le polymère le plus rigide a un module de flexion au plus égal à 850 MPa, ce dont il résulte que le mélange constitutif de la paroi du tube est fortement barrière à l'eau.

**5.** Tube selon l'une quelconque des revendications précédentes, **caractérisé en ce que** le premier polymère a un module de flexion au plus égal à 500 MPa.

**6.** Tube selon l'une quelconque des revendications précédentes, **caractérisé en ce que** le mélange comprend au moins un deuxième polymère.

**7.** Tube selon la revendication 6, **caractérisé en ce que** le deuxième polymère a un module de flexion supérieur à 70 MPa, et **en ce que** ce deuxième polymère est présent dans le mélange dans une proportion comprise entre 15% et 85%, de préférence entre 25% et 75%.

**8.** Tube selon la revendication 6, **caractérisé en ce que** le deuxième polymère a un module de flexion inférieur à 70 MPa et **en ce que** ce deuxième polymère est présent dans le mélange dans une proportion inférieure à 50%, de préférence comprise entre 15% et 40%.

**9.** Tube selon l'une quelconque des revendications 6 à 8, **caractérisé en ce que** le deuxième polymère est un copolymère d'éthylène-oléfine linéaire en $C_4$-$C_{10}$, ce deuxième polymère ayant un indice de fluidité (MFI) mesuré selon la norme ISO 1133 compris entre 3g/10mn et 15g/10mn, et de préférence compris entre 4g/10mn et 12g/10mn

**10.** Tube selon l'une quelconque des revendications 6 à 9, **caractérisé en ce que** le deuxième polymère est un copolymère d'éthylène-octène.

**11.** Tube selon l'une quelconque des revendications 6 à 8, **caractérisé en ce que** le deuxième polymère est un polypropylène.

**12.** Tube selon l'une quelconque des revendications 6 à 8, **caractérisé en ce que** le deuxième polymère est un copolymère hétérophasique de propylène et d'éthylène.

**13.** Tube selon l'une quelconque des revendications précédentes, **caractérisé en ce que** le premier et éventuellement unique polymère a un module de flexion inférieur à 250 MPa pour une contenance du tube au moins égale a 30 ml.

**14.** Tube selon l'une quelconque des revendications précédentes, **caractérisé en ce que** tout polymère de la famille des polypropylènes entrant dans la composition du mélange constitutif de la paroi a un indice de fluidité (MFI) mesuré selon la norme ISO 1133 au plus égal à 100g/10mn, et de préférence au plus égal à 20g/10mn.

**15.** Tube selon l'une quelconque des revendications précédentes, **caractérisé en ce que** la longueur (H) est comprise entre 40 et 85 mm.

**16.** Tube selon l'une quelconque des revendications précédentes, **caractérisé en ce que** la longueur (H) est comprise entre 85 et 200 mm.

**17.** Tube selon l'une quelconque des revendications précédentes, **caractérisé en ce qu'**il est obtenu par injection dans un moule d'injection comprenant un noyau (6) et une empreinte (7), le noyau comprenant lui-même une partie centrale (10) dont une extrémité libre (11) est en appui de centrage sur l'empreinte (7) au moins pendant la phase d'injection de la jupe du tube.

**18.** Tube selon la revendication 17, **caractérisé en ce que** l'extrémité libre (11) de la partie centrale (10) du noyau comportant des canaux d'alimentation (12), il présente, à son extrémité (122) d'injection, une paroi sommitale au moins partiellement formée de secteurs (32) correspondant aux canaux d'alimentation (12).

**19.** Tube selon la revendication 18, **caractérisé en ce que** les largeurs cumulées des secteurs (32), dans leurs zones de raccordement (18) avec la face (29) parallèle à la direction axiale (XX') de l'orifice (3), représentent au moins 15%, et de préférence plus de 25%, du périmètre de la face (29).

**20.** Tube selon l'une quelconque des revendications précédentes combinée à la revendication 19, **caractérisé en ce que** les secteurs (32) ont une largeur qui croît depuis un point d'injection (15) du moule suivant une direction radiale centrifuge jusqu'aux points de raccordement (18) des secteurs avec la face (29) de l'orifice (3).

**21.** Tube selon l'une quelconque des revendications précédentes combinée à la revendication 17, **caractérisé en ce que** la paroi de l'orifice (3) présente une zone d'étranglement annulaire (Z) située au-delà des secteurs (32).

**22.** Tube selon l'une des revendications 17 à 21, **caractérisé en ce que** la paroi de l'orifice (3) se prolonge par un anneau de matière (W) situé dans un plan perpendiculaire à l'axe XX', sous l'extrémité (123) de l'encolure.

**23.** Tube selon l'une quelconque des revendications 17 à 22 combinée à la revendication 17, **caractérisé en ce que** la partie centrale (10) du noyau (6) du moule d'injection est mobile, et **en ce que** la paroi sommitale de l'extrémité (122) du tube est formée sans ajourage, après recul de la partie centrale mobile (10) d'une distance correspondant à l'épaisseur voulue pour cette paroi sommitale.

**24.** Tube selon l'une quelconque des revendications 17 à 23 combinée à la revendication 23, **caractérisé en ce que** l'extrémité libre (11) de la partie centrale (10) du noyau est en forme de cône rentrant, l'angle (γ) formé par la portée d'appui de cette extrémité libre (11) sur l'empreinte (7) avec le plan perpendiculaire à l'axe longitudinal (XX') du tube étant compris entre 15° et 45°.

**25.** Tube selon la revendication 24, **caractérisé en ce que** l'angle (γ) est compris entre 15° et 20°.

**26.** Tube selon l'une quelconque des revendications 17 à 23 combinée à la revendication 23, **caractérisé en ce que** l'extrémité libre (11) de la partie centrale (10) du noyau est en forme de tronc de cône saillant, l'angle (β) formé par la portée d'appui du tronc de cône saillant de cette extrémité libre (11) sur l'empreinte (7) avec le plan perpendiculaire à l'axe longitudinal (XX') du tube étant compris entre 35° et 45°.

27. Tube selon la revendication 26, **caractérisé en ce que** l'extrémité libre (11) de la partie centrale (10) du noyau est en forme de cône rentrant dans sa partie interne au tronc de cône saillant, l'angle (δ) formé par la portée d'appui du cône rentrant de cette extrémité libre (11) sur l'empreinte (7) avec le plan perpendiculaire à l'axe longitudinal (XX') du tube étant inférieur à 45°, de préférence compris entre 15° et 20°.

28. Tube selon l'une quelconque des revendications 17 à 27 combinée à la revendication 23, **caractérisé en ce que** la tête comprend un moyen de fixation monobloc de type embout (5) et un réducteur monobloc (9), l'embout et le réducteur étant situés dans le prolongement de l'orifice (3) dans l'axe XX', la paroi sommitale (122) de l'embout formant le réducteur (9), l'orifice (8) du réducteur étant obtenu par découpe après le formage du tube par injection, le tube, l'embout, et le réducteur constituant ainsi un ensemble monobloc formé par injection en une opération.

29. Tube selon l'une quelconque des revendications précédentes combinée à la revendication 28, **caractérisé en ce qu'**il est équipé d'un moyen de bouchage (35) muni d'un picot (27) de forme conique, **en ce que** le picot pénètre dans l'orifice (8) du réducteur monobloc (9), et **en ce que** le picot met en tension radiale centrifuge (25) la paroi du réducteur (9) au voisinage de l'orifice d'ouverture (8).

30. Tube selon l'une quelconque des revendications 17 à 27, **caractérisé en ce que** la tête comprend un moyen de fixation monobloc de type embout (5) situé dans le prolongement de l'orifice (3) dans l'axe XX', le tube et le moyen de fixation (5) constituant un ensemble monobloc formé par injection en une opération.

31. Tube selon l'une des revendications 28 ou 30. **caractérisé en ce que** la paroi de l'embout monobloc (5) porte un filet artilleur (19).

32. Tube selon l'une quelconque des revendications 1 à 27, 30 et 31, **caractérisé en ce qu'**il est équipé d'un accessoire rapporté de type moyen de distribution de type réducteur rapporté (36) ou canule rapportée, ou moyen de fixation de type embout rapporté formant réducteur (37) ou canule, ou moyen de bouchage de type capsule service (38), l'accessoire rapporté étant situé dans le prolongement de l'orifice (3) dans l'axe XX' .

33. Tube selon la revendication 32, **caractérisé en ce que** l'accessoire rapporté (36) ou (37) ou (38) est équipé d'une cheminée (21) dont la face externe est conjuguée avec la face (29) parallèle à l'axe XX' de l'orifice (3), après introduction de la cheminée (21) à l'intérieur de l'orifice (3).

34. Tube selon la revendication 33, **caractérisé en ce que** la cheminée (21) de l'accessoire rapporté met la paroi de l'orifice (3) en tension radiale centrifuge (25).

35. Tube selon la revendication 33, **caractérisé en ce que** l'accessoire rapporté est non-amovible et **en ce que** la cheminée (21) de l'accessoire rapporté est équipée d'un dispositif de pénétration de forme conique (22), la face externe de la cheminée étant radialement en retrait (23) par rapport au dispositif de pénétration (22).

36. Procédé pour réaliser un tube souple constitué d'une jupe et d'une tête comprenant au moins un orifice d'évacuation et une encolure formant une extension radiale de l'orifice et se raccordant à la jupe, la jupe et l'encolure au moins constituant un ensemble monobloc, résistant à la fissuration sous contrainte et barrière à l'eau, **caractérisé en ce qu'**il comprend les étapes consistant à :

  - utiliser comme matériau constitutif de la paroi un mélange d'un nombre "n" au moins égal à 1 de polymères appartenant à la famille des copolymères-oléfines élaborés à partir de monomères en $C_2$ à $C_{10}$, un polymère au moins appartenant à la famille des polypropylènes, le mélange constitutif de la paroi présentant un module de flexion compris entre 700 et 80 MPa, de préférence compris entre 500 et 120 MPa selon la norme NF EN ISO 178 ; et à
  - réaliser la jupe et la tête du tube par injection en une seule opération d'injection du mélange dans un moule d'injection comprenant une empreinte (7) et un noyau (6), ledit noyau comprenant une partie centrale (10) dont une extrémité supérieure libre (11) est en appui de centrage sur l'empreinte (7) au moins pendant l'injection de la jupe.

**Claims**

1. Tube resistant to stress-cracking and forming a water barrier, essentially consisting of a flexible skirt (1) elongate in an axial direction (XX'} and of a head (2), comprising at least one evacuation orifice (3) and a neck (4) forming a radial extension of the orifice (3) and being joined to the skirt (1) along an axial direction {XX'), at least the skirt and neck forming a single-piece assembly, the wall of the tube consisting of a mixture of a number "n" at least equal to 1 of polymers belonging to the family of copolymers-olefins prepared from $C_2$ to $C_{10}$ monomers, **characterized:**

   - **in that**, at mid-distance of its length (H) along the axial direction (XX') from the end (121) of the skirt (1) distant from the head as far as the end (123) of the neck (4) forming the evacuation orifice (3), it has a wall thickness of between 0.3 0 and 1.00 mm,
   - **in that** at least one polymer of the mixture belongs to the polypropylene family,
   - **in that** the constituent mixture of the tube wall has a flexural modulus of between 700 MPa and 80 MPa, preferably between 500 MPa and 120 MPa according to standard NF EN ISO 178, and
   - **in that**, each polymer having a flexural modulus defined according to standard NF EN ISO 178 and being conventionally assigned a rank "i" which, in a classification of the "n" polymers of the mixture in decreasing order of their respective flexural modulus values $\mu_i$, places this polymer between a first polymer (i=1) of maximum rigidity and a last polymer (i=n) of minimum rigidity, and each polymer being contained in the mixture in a weight percentage $x_i$ with respect to the total weight of the mixture, the mixture has a dispersion factor (Kd) of the flexural modulus values of no more than 3 or 2.2 according to whether or not it contains a polyethylene, preferably no more than 2 in both these cases, and further preferably no more than 1.5, this dispersion factor (Kd) being defined as:

$$\text{Kd} = \sum_{i=1}^{n} \left[ \left( \left( \sum_{j=1}^{i-1} x_j \right) \cdot (\nu_{1,i-1} - \nu_{1,i})^2 + x_i \cdot (\lambda_i - \nu_{1,i})^2 \right) / \nu_{1,i}^2 \right],$$

in which:

$$\lambda_i = \text{MAX}\ (\mu_i,\ 1500\ \text{MPa})$$

and in which:

$$\nu_{p,q} = \left( \sum_{i=p}^{q} x_i \cdot \lambda_i \right) / \left( \sum_{i=p}^{q} x_i \right).$$

2. Tube as in claim 1, **characterized in that** the first polymer is a copolymer of propylene and ethylene.

3. Tube as in any of the preceding claims, **characterized in that** the first polymer is a heterophase polypropylene copolymer of propylene and ethylene.

4. Tube as in any of the preceding claims, **characterized in that** the most rigid polymer has a flexural modulus of no more than 850 MPa, with the result that the mixture forming the tube wall has a strong water barrier.

5. Tube as in any of the preceding claims, **characterized in that** the first polymer has a flexural modulus of no more than 500 MPa.

6. Tube as in any of the preceding claims, **characterized in that** the mixture comprises at least one second polymer.

EP 1 587 668 B1

7. Tube as in claim 6, **characterized in that** the second polymer has a flexural modulus greater than 70 MPa, and **in that** this second polymer is contained in the mixture to a proportion of 15% to 85%, preferably between 25% and 75%.

8. Tube as in claim 6, **characterized in that** the second polymer has a flexural modulus of less than 70 MPa, and **in that** this second polymer is contained in the mixture to a proportion of less than 50%, preferably between 15% and 40%.

9. Tube as in any of claims 6 to 8, **characterized in that** the second polymer is a linear $C_4$-$C_{10}$ copolymer of ethylene-olefin, this second polymer having a melt flow index (MFI) measured according to standard ISO 1133 of between 3g/10mn and 15g/10mn, preferably between 4g/10mn and 12g/10mn.

10. Tube as in any of claims 6 to 9, **characterized in that** the second polymer is a copolymer of ethylene-octene.

11. Tube as in any of claims 6 to 8, **characterized in that** the second polymer is a polypropylene.

12. Tube as in any of claims 6 to 8, **characterized in that** the second polymer is a heterophase copolymer of propylene and ethylene.

13. Tube as in any of the preceding claims, **characterized in that** the first and optionally the single polymer has a flexural modulus of less than 250 MPa for a tube capacity of at least 3 0 ml.

14. Tube as in any of the preceding claims, **characterized in that** any polymer of the polypropylene family entering into the wall composition mixture has a melt flow index (MFI) measured according to standard ISO 1133 of no more than 100g/10mn, preferably no more than 20g/10mn.

15. Tube as in any of the preceding claims, **characterized in that** the length (H) is between 40 and 85 mm.

16. Tube as in any of the preceding claims, **characterized in that** the length (H) is between 85 and 200 mm.

17. Tube as in any of the preceding claims, **characterized in that** it is obtained by injection into an injection mould comprising a core (6) and an impression (7), the core itself comprising a central part (10) of which one free end (11) centre-bears upon the impression (7) at least during the injection phase of the tube skirt.

18. Tube as in claim 17, **characterized in that** the free end (11) of the central part (10) of the core comprising supply channels (12), at its injection end (122) it has an apex wall formed at least in part of sectors (32) corresponding to the supply channels (12).

19. Tube as in claim 18, **characterized in that** the accumulated widths of the sectors (32), in the zones (18) where they join with the face (29) parallel to the axial direction (XX') of the orifice (3), represent at least 15%, preferably more than 25%, of the perimeter of the face (29).

20. Tube as in any of the preceding claims combined with claim 19, **characterized in that** the sectors (32) have a width which increases from an injection point (15) of the mould along a centrifugal radial direction as far as the joining points (18) of the sectors with the face (29) of orifice (3).

21. Tube as in any of the preceding claims combined with claim 17, **characterized in that** the wall of orifice (3) has an annular throttle zone (Z) located beyond sectors (32).

22. Tube as in any of claims 17 to 21, **characterized in that** the wall of orifice (3) is extended by a ring of material (W) positioned in a plane perpendicular to axis XX', under end (123) of the neck.

23. Tube as in any of claims 17 to 22 combined with claim 17, **characterized in that** the central part (10) of core (6} of the injection mould is mobile, and **in that** the apex wall of the tube end (122) is formed with no gaps by drawing backwardly the mobile central part (10) over a distance corresponding to the desired thickness of this apex wall.

24. Tube as in any of claims 17 to 23, combined with claim 23, **characterized in that** the free end (11) of the central part (10) of the core is in the shape of a sunken cone, the angle (γ) formed by the bearing surface of this free end (11) on impression (7) with the plane perpendicular to the longitudinal axis (XX') of the tube lying between 15° and 45°.

21

**25.** Tube as in claim 24, **characterized in that** the angle (γ) lies between 15° and 20°.

**26.** Tube as in any of claims 17 to 23, combined with claim 23, **characterized in that** the free end (11) of the central part (10) of the core is in the shape of a projecting cone frustum, the angle (β) formed by the bearing surface of the projecting cone frustum of this free end (11) on impression (7) with the plane perpendicular to the longitudinal axis (XX') of the tube lying between 35° and 45°.

**27.** Tube as in claim 26, **characterized in that** the free end (11) of the central part (10) of the core is in the shape of a sunken cone in its part internal to the projecting cone frustum, the angle (δ) formed by the bearing surface of the sunken cone of this free end (11) on impression (7) with the plane perpendicular to the longitudinal axis (XX') of the tube 30 being less than 45°, preferably between 15° and 20°.

**28.** Tube as in any of claims 17 to 27 combined with claim 23, **characterized in that** the head comprises single-piece securing means of nozzle type (5), and a single-piece reducer (9), the nozzle and reducer being positioned in the continuation of orifice (3) along axis XX', the apex wall (122) of the nozzle forming reducer (9), the reducer orifice (8) being obtained by cutting after injection-forming the tube, the tube, nozzle and reducer thereby forming a single-piece assembly formed by injection in a single operation.

**29.** Tube as in any of the preceding claims combined with claim 28, **characterized in that** it is provided with capping means (35) provided with a tip (27) of conical shape, **in that** the tip enters into the orifice (8) of the single-piece reducer (9), **in that** the tip places the wall of the reducer (9) under centrifugal radial tension (25) in the vicinity of the opening orifice (8).

**30.** Tube as in any of claims 17 to 27, **characterized in that** the head comprises single-piece securing means of nozzle type (5} positioned in the continuation of orifice (3) along axis XX', the tube and the securing means (5) forming a single-piece assembly formed by injection in a single operation.

**31.** Tube as in any of claims 28 or 30, **characterized in that** the wall of the single-piece nozzle (5) carries an asymmetric thread (19}.

**32.** Tube as in any of claims 1 to 27, 30 and 31, **characterized in that** it is provided with an added accessory of dispensing type of added reducer type (36) or added nozzle tip type, or securing means of added nozzle type forming a reducer (37) or nozzle tip, or capping means of service cap type (38), the added accessory being positioned in the continuation of orifice (3) along axis XX'.

**33.** Tube as in claim 32, **characterized in that** the added accessory (36), (37) or (38) is provided with a chimney (21) of which an outer face is conjugated with the face (29) parallel to axis XX' of orifice (3), after inserting the chimney (21) inside the orifice (3).

**34.** Tube as in claim 33, **characterized in that** the chimney (21} of the added accessory places the wall of orifice (3) under centrifugal radial tension (25).

**35.** Tube as in claim 33, **characterized in that** the added accessory is non-removable and **in that** the chimney {21} of the added accessory is fitted with a penetration device of conical shape (22), the outer face of the chimney being radially recessed (23) with respect to the penetration device (22).

**36.** Method for fabricating a flexible tube consisting of a skirt and head comprising at least one evacuation orifice and a neck forming a radial extension of the orifice and being joined to the skirt, at least the skirt and neck forming a single-piece assembly resistant to stress-cracking and forming a water barrier, **characterized in that** it comprises the steps consisting of:

- using as constituent material of the wall a mixture of a number "n" at least equal to 1 of polymers belonging to the family of copolymers-olefins prepared from $C_2$ to $C_{10}$ monomers, at least one polymer belonging to the polypropylene family, the constituent mixture of the wall having a flexural modulus of between 700 and 80 MPa, preferably between 500 and 120 MPa according to standard NF EN ISO 178; and of
- fabricating the skirt and head of the tube by injecting the mixture, in a single injection operation, into an injection mould comprising an impression (7) and a core (6), said core comprising a central part (10) of which one free upper end (11) centre-bears upon the impression (7) at least during the skirt injection phase.

**Patentansprüche**

1. Tube, die unter Beanspruchung rissfest ist und eine Wassersperre bildet und im wesentlichen aus einem sich in einer axialen Richtung (XX') erstreckenden nachgiebigen Mantel (1) und einem Kopf (2) besteht, der zumindest eine Abführöffnung (3) und einen Hals (4) umfaßt, welcher eine radiale Erweiterung der Öffnung (3) bildet und sich an den Mantel (1) in axialer Richtung (XX') anschließt, wobei der Mantel und der Hals zumindest eine Einheit aus einem Stück bilden, wobei die Tubenwand aus einem Gemisch mit einer Anzahl "n", wobei "n" zumindest gleich 1 ist, von Polymeren zusammengesetzt ist, die der Gruppe der Copolymer-Olefine angehören, die aus $C_2$- bis $C_{10}$-Monomeren gebildet sind, **dadurch gekennzeichnet, dass**

   - sie in der axialen Richtung (XX') in der Hälfte ihrer Länge (H) ausgehend von dem vom Kopf entfernt liegenden Ende (121) des Mantels (1) bis zum die Abführöffnung (3) bildenden Ende (123) des Halses (4) eine Wandstärke zwischen 0,30 mm und 1,00 mm aufweist,
   - zumindest ein Polymer des Gemischs der Gruppe der Polypropylene angehört,
   - das die Tubenwand bildende Gemisch ein Biegemodul zwischen 700 MPa und 80 MPa und vorzugsweise zwischen 500 MPa und 120 MPa gemäß der Norm NF EN ISO 178 aufweist, und dass
   - ausgehend davon, dass jedes Polymer ein gemäß der Norm NF EN ISO 178 definiertes Biegemodul aufweist und definitionsgemäß einer Rangstufe (i) zugeordnet ist, die bei einer Einteilung der "n" Polymere des Gemischs in abnehmender Reihenfolge ihrer jeweiligen Biegemodule ($\mu_i$) dieses Polymer zwischen einem ersten Polymer (i=1) maximaler Steifigkeit und einem letzten Polymer (i=n) minimaler Steifigkeit einordnet, und dass jedes Polymer mit einem gewichtsmäßigen Prozentsatz $x_i$ im Verhältnis zum Gesamtgewicht des Gemischs in das Gemisch eingeht, das Gemisch einen Streuungsfaktor (Kd) bezüglich der Biegemodule von höchstens gleich 3 bzw. 2,2 aufweist, je nachdem, ob es ein Polyethylen enthält oder nicht, vorzugsweise von höchstens gleich 2 in diesen beiden Fällen, und weiter bevorzugt von höchstens gleich 1,5, wobei dieser Streuungsfaktor (Kd) definiert ist durch:

$$Kd = \sum_{i=1}^{n}\left[\left(\left(\sum_{j=1}^{i-1} x_j\right).(\nu_{1,i-1}-\nu_{1,i})^2 + x_i.(\lambda_i-\nu_{1,i})^2\right)/\nu_{1,i}^2\right]$$

   worin $\lambda_i = MAX (\mu_i, 1500\ MPa)$ und worin $\nu_{p,q} = \left(\sum_{i=p}^{q} x_i \lambda_i\right)/\left(\sum_{i=p}^{q} x_i\right)$ ist.

2. Tube nach Anspruch 1, **dadurch gekennzeichnet, dass** das erste Polymer ein Copolymer aus Propylen und Ethylen ist.

3. Tube nach einem der vorangehenden Ansprüche, **dadurch gekennzeichnet, dass** das erste Polymer ein heterophasiges Polypropylen-Copolymer aus Propylen und Ethylen ist.

4. Tube nach einem der vorangehenden Ansprüche, **dadurch gekennzeichnet, dass** das steifste Polymer ein Biegemodul von höchstens gleich 850 MPa hat, woraus sich ergibt, dass das die Tubenwand bildende Gemisch stark wassersperrend ist.

5. Tube nach einem der vorangehenden Ansprüche, **dadurch gekennzeichnet, dass** das erste Polymer ein Biegemodul höchstens gleich 500 MPa hat.

6. Tube nach einem der vorangehenden Ansprüche, **dadurch gekennzeichnet, dass** das Gemisch zumindest ein zweites Polymer umfaßt.

7. Tube nach Anspruch 6, **dadurch gekennzeichnet, dass** das zweite Polymer ein Biegemodul von über 70 MPa hat und dass dieses zweite Polymer im Gemisch in einer Proportion zwischen 15 % und 85 %, vorzugsweise zwischen 25 % und 75 % vorliegt.

**8.** Tube nach Anspruch 6, **dadurch gekennzeichnet, dass** das zweite Polymer ein Biegemodul von unter 70 MPa hat und dass dieses zweite Polymer im Gemisch in einer Proportion von unter 50 %, vorzugsweise zwischen 15 % und 40 % vorliegt.

**9.** Tube nach einem der Ansprüche 6 bis 8, **dadurch gekennzeichnet, dass** das zweite Polymer ein lineares Ethylen-/-$C_4$-$C_{10}$-Olefin-Copolymer ist, wobei dieses zweite Polymer eine nach der ISO-Norm 1133 gemessene Fließzahl (MFI) zwischen 3g/10 min und 15 g/10 min und vorzugsweise zwischen 4 g/10 min und 12 g/10 min hat.

**10.** Tube nach einem der Ansprüche 6 bis 9, **dadurch gekennzeichnet, dass** das zweite Polymer ein Ethylen-/-Octen-Copolymer ist.

**11.** Tube nach einem der Ansprüche 6 bis 8, **dadurch gekennzeichnet, dass** das zweite Polymer ein Polypropylen ist.

**12.** Tube nach einem der Ansprüche 6 bis 8, **dadurch gekennzeichnet, dass** das zweite Polymer ein heterophasiges Copolymer aus Propylen und Ethylen ist.

**13.** Tube nach einem der vorangehenden Ansprüche, **dadurch gekennzeichnet, dass** das erste und gegebenenfalls einzige Polymer ein Biegemodul unter 250 MPa bei einem Tubeninhalt von zumindest gleich 30 ml hat.

**14.** Tube nach einem der vorangehenden Ansprüche, **dadurch gekennzeichnet, dass** jegliches Polymer aus der Gruppe der Polypropylene, die in die Zusammensetzung des die Wand bildenden Gemisches eintritt, eine nach der ISO-Norm 1133 gemessene Fließzahl (MFI) von höchstens gleich 100 g/ 10 min, vorzugsweise von höchstens gleich 20 g/10 min hat.

**15.** Tube nach einem der vorangehenden Ansprüche, **dadurch gekennzeichnet, dass** die Länge (H) zwischen 40 und 85 mm beträgt.

**16.** Tube nach einem der vorangehenden Ansprüche, **dadurch gekennzeichnet, dass** die Länge (H) zwischen 85 und 200 mm beträgt.

**17.** Tube nach einem der vorangehenden Ansprüche, **dadurch gekennzeichnet, dass** sie durch Spritzen in eine Spritzgießform mit einem Kern (6) und einer Matrize (7) entsteht, wobei der Kern selbst einen Mittelteil (10) enthält, von dem ein freies Ende (11) zumindest während der Spritzgießphase des Tubenmantels zentriert an der Matrize (7) anliegt.

**18.** Tube nach Anspruch 17, **dadurch gekennzeichnet, dass** bei dem Zuführkanäle (12) aufweisenden freien Ende (11) des Mittelteils (10) des Kerns die Tube an ihrem Spritzgießende (122) eine Scheitelwand aufweist, die zumindest teilweise aus Sektoren (32) gebildet ist, die den Zuführkanälen (12) entsprechen.

**19.** Tube nach Anspruch 18, **dadurch gekennzeichnet, dass** die kumulierten Breiten der Sektoren (32) in ihren Verbindungsbereichen (18) mit der parallel zur axialen Richtung (XX') der Öffnung (3) verlaufenden Fläche (29) zumindest 15 %, vorzugsweise über 25 % des Umfangs der Fläche (29) darstellen.

**20.** Tube nach einem der vorangehenden Ansprüche in Kombination mit Anspruch 19, **dadurch gekennzeichnet, dass** die Sektoren (32) eine Breite haben, die von einem Spritzgießpunkt (15) der Form in radial-zentrifugaler Richtung bis zu den Verbindungspunkten (18) der Sektoren mit der Fläche (29) der Öffnung (3) ansteigt.

**21.** Tube nach einem der vorangehenden Ansprüche in Kombination mit Anspruch 17, **dadurch gekennzeichnet, dass** die Wand der Öffnung (3) einen ringförmigen Verengungsbereich (Z) aufweist, der jenseits der Sektoren (32) liegt.

**22.** Tube nach einem der Ansprüche 17 bis 21, **dadurch gekennzeichnet, dass** die Wand der Öffnung (3) sich über einen Materialring (W) fortsetzt, der in einer senkrecht zur Achse XX' verlaufenden Ebene unter dem Ende (123) des Halses liegt.

**23.** Tube nach einem der Ansprüche 17 bis 22 in Kombination mit Anspruch 17, **dadurch gekennzeichnet, dass** der Mittelteil (10) des Kerns (6) der Spritzgießform beweglich ist und dass die Scheitelwand des Endes (122) der Tube ohne Aussparung gebildet wird, nachdem der bewegliche Mittelteil (10) um ein Abstandsmaß zurückgezogen wurde, welches der für die Scheitelwand gewünschten Dicke entspricht.

**24.** Tube nach einem der Ansprüche 17 bis 23 in Kombination mit Anspruch 23, **dadurch gekennzeichnet, dass** das freie Ende (11) des Mittelteils (10) des Kerns in Form eines in sich zurückkehrenden Kegels vorliegt, wobei der Winkel (γ), der von dem Lagersitz dieses freien Endes (11) an der Matrize (7) und von der senkrecht zur Längsachse (XX') der Tube verlaufenden Ebene gebildet wird, zwischen 15° und 45° beträgt.

**25.** Tube nach Anspruch 24, **dadurch gekennzeichnet, dass** der Winkel (γ) zwischen 15° und 20° beträgt.

**26.** Tube nach einem der Ansprüche 17 bis 23 in Kombination mit Anspruch 23, **dadurch gekennzeichnet, dass** das freie Ende (11) des Mittelteils (10) des Kerns in Form eines vorspringenden Kegelstumpfs vorliegt, wobei der Winkel (β), der von dem Lagersitz des vorspringenden Kegelstumpfs dieses freien Endes (11) an der Matrize (7) und von der senkrecht zur Längsachse (XX') der Tube verlaufenden Ebene gebildet wird, zwischen 35° und 45° beträgt.

**27.** Tube nach Anspruch 26, **dadurch gekennzeichnet, dass** das freie Ende (11) des Mittelteils (10) des Kerns in Form eines in seinem Bereich innerhalb des vorspringenden Kegelstumpfs in sich zurückkehrenden Kegels vorliegt, wobei der Winkel (δ), der von dem Lagersitz des in sich zurückkehrenden Kegels dieses freien Endes (11) an der Matrize (7) und von der senkrecht zur Längsachse (XX') der Tube verlaufenden Ebene gebildet wird, kleiner als 45° ist und vorzugsweise zwischen 15° und 20° beträgt.

**28.** Tube nach einem der Ansprüche 17 bis 27 in Kombination mit Anspruch 23, **dadurch gekennzeichnet, dass** der Kopf ein Befestigungsmittel aus einem Stück nach Art eines Ansatzstücks (5) und ein Reduzierstück aus einem Stück (9) umfaßt, wobei das Ansatzstück und das Reduzierstück in Verlängerung der Öffnung (3) in der Achse XX' liegen, wobei die Scheitelwand (122) des Ansatzstücks das Reduzierstück (9) bildet, wobei die Öffnung (8) des Reduzierstücks durch Einschneiden nach dem Spritzgießformen der Tube erhalten wird, wobei die Tube, das Ansatzstück und das Reduzierstück somit eine Einheit aus einem Stück bilden, die in einem Vorgang durch Spritzgießformen gebildet wird.

**29.** Tube nach einem der vorangehenden Ansprüche in Kombination mit Anspruch 28, **dadurch gekennzeichnet, dass** sie mit einem Schließmittel (35) ausgestattet ist, das mit einem kegelförmigen Spitzkeil (27) versehen ist, dass der Spitzkeil in die Öffnung (8) des Reduzierstücks aus einem Stück (9) eindringt und dass der Spitzkeil die Wand des Reduzierstücks (9) benachbart zur Öffnung (8) unter radial-zentrifugale Spannung (25) setzt.

**30.** Tube nach einem der Ansprüche 17 bis 27, **dadurch gekennzeichnet, dass** der Kopf ein Befestigungsmittel aus einem Stück nach Art eines Ansatzstücks (5) enthält, das in der Verlängerung der Öffnung (3) in der Achse XX' liegt, wobei die Tube und das Befestigungsmittel (5) eine Einheit aus einem Stück bilden, die in einem Vorgang durch Spritzgießformen gebildet wird.

**31.** Tube nach einem der Ansprüche 28 oder 30, **dadurch gekennzeichnet, dass** die Wand des Ansatzstücks aus einem Stück (5) ein asymmetrisches Gewinde (Artillerie-Form) (19) trägt.

**32.** Tube nach einem der Ansprüche 1 bis 27, 30 und 31, **dadurch gekennzeichnet, dass** sie mit einem angesetzten Zusatzstück nach Art eines Ausgabemittels vom Typ angesetztes Reduzierstück (36) bzw. angesetzte Kanüle oder nach Art eines Befestigungsmittels vom Typ eines ein Reduzierstück (37) bildenden angesetzten Ansatzstücks bzw. Kanüle oder nach Art eines Schließmittels vom Typ Bedienkapsel (38) ausgestattet ist, wobei das angesetzte Zusatzstück in der Verlängerung der Öffnung (3) in der Achse XX' liegt.

**33.** Tube nach Anspruch 32, **dadurch gekennzeichnet, dass** das angesetzte Zusatzstück (36) oder (37) oder (38) mit einem Schaft (21) ausgestattet ist, dessen Außenseite nach Einführen des Schafts (21) in das Innere der Öffnung (3) der parallel zur Achse XX' der Öffnung (3) verlaufenden Fläche (29) entspricht.

**34.** Tube nach Anspruch 33, **dadurch gekennzeichnet, dass** der Schaft (21) des angesetzten Zusatzstücks die Wand der Öffnung (3) unter radial-zentrifugale Spannung (25) setzt.

**35.** Tube nach Anspruch 33, **dadurch gekennzeichnet, dass** das angesetzte Zusatzstück nicht abnehmbar ist und dass der Schaft (21) des angesetzten Zusatzstücks mit einer kegelförmigen Eindringvorrichtung (22) ausgestattet ist, wobei die Außenseite des Schafts bezüglich der Eindringvorrichtung (22) im radialen Rücksprung (23) liegt.

**36.** Verfahren zum Herstellen einer nachgiebigen Tube, die aus einem Mantel und einem Kopf besteht, der zumindest eine Abführöffnung und einen Hals umfaßt, welcher eine radiale Erweiterung der Öffnung bildet und sich an den Mantel anschließt, wobei der Mantel und der Hals zumindest eine Einheit aus einem Stück bilden, die unter Beanspruchung rissfest ist und eine Wassersperre bildet, **dadurch gekennzeichnet, dass** es folgende Schritte umfasst:

- Verwenden eines Gemischs mit einer Anzahl "n", wobei "n" zumindest gleich 1 ist, von Polymeren als die Wand bildendes Material, die der Gruppe der Copolymer-Olefine angehören, die aus $C_2$ bis $C_{10}$ Monomeren gebildet sind, wobei zumindest ein Polymer der Gruppe der Polypropylene angehört, wobei das die Wand bildende Gemisch ein Biegemodul zwischen 700 MPa und 80 MPa und vorzugsweise zwischen 500 MPa und 120 MPa gemäß der Norm NF EN ISO 178 aufweist, und
- Ausbilden des Mantels und des Kopfs der Tube mittels Spritzgießen in einem Vorgang durch Einspritzen des Gemischs in eine Spritzgießform mit einer Matrize (7) und einem Kern (6), wobei der Kern einen Mittelteil (10) umfaßt, von dem ein freies oberes Ende (11) zumindest während des Spritzgießvorgangs des Mantels zentriert an der Matrize (7) anliegt.

Fig. 1   Fig. 2

Fig. 3A

Fig. 3B

Fig. 3C

Fig. 3D

Fig. 4

Fig. 5

Fig. 6

Fig. 7

Fig. 8

Fig. 9

Fig. 10

Fig. 9A

Fig. 11A

Fig. 11B

Fig. 11D

Fig. 11C